# EUROPÄISCHE PATENTANMELDUNG

(11) **EP 4 098 164 A2**
(43) Veröffentlichungstag der Anmeldung: **07.12.2022**
(21) Anmeldenummer: 22185176.9
(22) Anmeldetag: 08.02.2013
(51) Int. Cl.: A47L 7/00, A47L 9/28

(54) **IDENTIFIKATIONSVERFAHREN FÜR EIN SAUGGERÄT UND EINE HAND-WERKZEUGMASCHINE**

(30) Priorität: 17.02.2012 DE 102012003077
(62) Teilanmeldung aus: 18182607.4
(71) Anmelder: Festool GmbH, 73240 Wendlingen am Neckar (DE)
(72) Erfinder: Barabeisch, Markus, 89269 Vöhringen (DE)
(74) Vertreter: Patentanwälte Bregenzer und Reule Partnerschaftsgesellschaft mbB

(57) **Zusammenfassung**

Die Erfindung betrifft ein Verfahren zum Betreiben einer Hand-Werkzeugmaschine (80) mit einem Sauggerät (10), das einen Saugmotor (19) zum Erzeugen des Saugstroms (20) und ein Saugergehäuse (11), in dem der Saugmotor (19) und ein Staubsammelraum (15) zum Sammeln der aus dem Saugstrom (20) abgesonderten Partikel angeordnet ist, aufweist, wobei das Sauggerät (10) zum Absaugen von beim Betrieb einer einen Antriebsmotor (81) zum Antreiben eines Werkzeugs (82) aufweisenden Hand-Werkzeugmaschine (80), vorgesehen ist. Es ist vorgesehen, dass eine Sauggerät-Kommunikationseinrichtung (40; 140) des Sauggeräts (10) mit einer in einem Abstand zu dem Saugergehäuse (11) im Zusammenhang mit der Hand-Werkzeugmaschine (80) zu betreibenden oder einen Bestandteil der Hand-Werkzeugmaschine (80) bildenden Extern-Kommunikationseinrichtung (50; 150; 250) kommuniziert, wobei die Sauggerät-Kommunikationseinrichtung (40; 140) mindestens eine Identifikationskennung (410, 460) und/oder einen Betriebsparameter (400, 450) an die Extern- Kommunikationseinrichtung (50; 150; 250) sendet und/oder mindestens eine Identifikationskennung (410, 460) und/oder einen Betriebsparameter (400, 450) von der Extern-Kommunikationseinrichtung (50; 150; 250) empfängt, und dass das Sauggerät (10) und/oder die Hand-Werkzeugmaschine (80) mindestens eine Funktion anhand der jeweils empfangenen mindestens einen Identifikationskennung (410, 460) und/oder des jeweils empfangenen Betriebsparameters (400, 450) ausführen.

## Beschreibung

Die Erfindung betrifft ein Verfahren zum Betreiben einer Hand-Werkzeugmaschine mit einem Sauggerät, das einen Saugmotor zum Erzeugen des Saugstroms und ein Saugergehäuse, in dem der Saugmotor und ein Staubsammelraum zum Sammeln der aus dem Saugstrom abgesonderten Partikel angeordnet ist, aufweist, wobei das Sauggerät zum Absaugen von beim Betrieb einer einen Antriebsmotor zum Antreiben eines Werkzeugs aufweisenden Hand-Werkzeugmaschine, vorgesehen ist. Die Erfindung betrifft ferner eine insbesondere einen Bestandteil der Hand-Werkzeugmaschine bildende Extern-Kommunikationseinrichtung und ein Sauggerät.

Ein derartiges Sauggerät ist beispielsweise aus DE 10 2009 015 642 A1 bekannt. Das Sauggerät saugt über einen Saugschlauch Partikel an, wobei der Saugschlauch seinerseits mit einer elektrischen Hand-Werkzeugmaschine verbunden werden kann, um von dieser Hand-Werkzeugmaschine bei einer Werkstück-Bearbeitung, beispielsweise Sägen oder Bohren, erzeugten Staub bzw. Partikel abzusaugen.

Es ist die Aufgabe der vorliegenden Erfindung, die Nutzbarkeit eines Sauggerätes zu verbessern.

Zur Lösung der Aufgabe ist bei einem Verfahren der eingangs genannten Art vorgesehen, dass eine Sauggerät-Kommunikationseinrichtung des Sauggeräts mit einer in einem Abstand zu dem Saugergehäuse im Zusammenhang mit der Hand-Werkzeugmaschine zu betreibenden oder einen Bestandteil der Hand-Werkzeugmaschine bildenden Extern-Kommunikationseinrichtung kommuniziert, wobei die Sauggerät-Kommunikationseinrichtung mindestens eine Identifikationskennung und/oder einen Betriebsparameter an die Extern-Kommunikationseinrichtung sendet und/oder mindestens eine Identifikationskennung und/oder einen Betriebsparameter von der Extern-Kommunikationseinrichtung empfängt, und dass das Sauggerät und/oder die Hand-Werkzeugmaschine mindestens eine Funktion anhand der jeweils empfangenen mindestens einen Identifikationskennung und/oder des jeweils empfangenen Betriebsparameters ausführen.

Die Erfindung betrifft ferner ein Sauggerät, das mit einer Sauggerät-Kommunikationseinrichtung ausgestattet ist oder mit dieser direkt kommuniziert sowie eine Extern-Kommunikationseinrichtung, insbesondere als Bestandteil einer Hand-Werkzeugmaschine.

Es ist ein Grundgedanke der vorliegenden Erfindung, dass sich die Hand-Werkzeugmaschine bei dem Sauggerät anmeldet und/oder umgekehrt und in diesem Zusammenhang eine Identifikationskennung und/oder eine Betriebsparameter an das jeweils andere Gerät sendet. Anhand dieser Informationen ist eine Initialisierung möglich derart, dass beispielsweise das Sauggerät anschließend seinen Betriebsmodus so einstellt, dass dieser zu der Hand-Werkzeugmaschine passt. Wenn also beispielsweise das Werkzeug eine Hand-Säge ist, die eine große Menge von Partikeln beim Sägen in ein Werkstück produziert, stellt der Sauger entsprechend höhere Saugleistung ein. Auch die Abreinigung eines Filters des Sauggeräts kann dann entsprechend häufiger erfolgen, d.h. dass ein Abreinigungsintervall beispielsweise bei einer Kreissäge wesentlich kleiner ist als beispielsweise bei einer Stichsäge, die weniger Partikel bei ihrem Betrieb erzeugt. An dieser Stelle sei bemerkt, dass die Hand-Werkzeugmaschine selbstverständlich unterschiedlich ausgestaltet sein kann, beispielsweise eine Bohrmaschine, eine Säge, insbesondere eine Kreissäge, Tauchsäge oder dergleichen umfassen kann.

Es ist möglich, dass das einen Betriebsparameter oder eine Identifikationskennung empfangende Gerät, also das Sauggerät oder die Hand-Werkzeugmaschine, anhand der empfangenen Identifikationskennung bzw. des empfangenen Betriebsparameters seine spätere Funktionsweise einstellt, so dass beispielsweise das Sauggerät sich auf die Hand-Werkzeugmaschine einstellt und dementsprechend beispielsweise die Saugleistung nicht unter ein Mindestmaß sinken oder über ein Maximum ansteigen lässt. Wenn mit der Hand-Werkzeugmaschine, z.B. einer Schleif- oder Poliermaschine, beispielsweise entsprechend empfindliche Oberflächen zu bearbeiten sind, kann eine zu große Saugleistung hinderlich sein. Auf der anderen Seite kann eine zu geringe Saugleistung, ein verstopfter Filter oder dergleichen auf Seiten des Sauggeräts auch zu unerwünschter Beeinträchtigung der Umwelt führen, d.h. dass das Sauggerät nicht in ausreichendem Maße Partikel aus dem Arbeitsbereich der Hand-Werkzeugmaschine absaugt. Dies kann an sich zu gesundheitlichen Beeinträchtigungen des Nutzers führen. Die Erfindung kann hier Abhilfe schaffen, indem das Sauggerät quasi erkennt, welche Hand-Werkzeugmaschine angeschlossen ist und dementsprechend seine Betriebsparameter beziehungsweise Arbeitsparameter einstellt.

Die im Zusammenhang mit dem erfindungsgemäßen Verfahren vorgeschlagenen Maßnahmen der abhängigen Ansprüche können sich selbstverständlich auch in entsprechende Ausgestaltung des Sauggeräts, der Sauggerät-Kommunikationseinrichtung und der Extern-Kommunikationseinrichtung niederschlagen. Beispielsweise haben diese Geräte zur Durchführung der jeweiligen Schritte geeignete Betriebsmittel, zum Beispiel einen Mikroprozessor und geeignete Programme oder dergleichen.

Nachfolgend werden einige erfindungsgemäße Schritte erläutert:
Eine vorteilhafte Maßnahme sieht vor, dass das Sauggerät oder die Hand-Werkzeugmaschine anhand des empfangenen Betriebsparameters und/oder der Identifikationskennung ermittelt, ob oder unter welchen Bedingungen ein mindestens einem Kriterium entsprechende Betrieb der Paarung bestehend aus Sauggerät und der Hand-Werkzeugmaschine möglich ist. Bei dem Kriterium kann es sich beispielsweise um ein Sicherheitskriterium, ein Umweltkriterium, ein Arbeitsschutz-Kriterium oder dergleichen handeln. Wenn also beispielsweise das Sauggerät nicht in ausreichendem Maße Partikel absaugen kann, ist es möglich, dass das Sauggerät und/oder Hand-Werkzeugmaschine einen späteren Betrieb blockiert. Der Benutzer wird dadurch geschützt.

Das Sauggerät und/oder die Hand-Werkzeugmaschine verfügen zweckmäßigerweise über ein Ausgabemittel oder mehrere Ausgabemittel, um beispielsweise mindestens einen Betriebsparameter und/oder mindestens eine Identifikationskennung und/oder das obige mindestens eine Kriterium auszugeben. An dem Ausgabemittel kann selbstverständlich auch vorteilhaft angegeben werden, ob und unter welchen Bedingungen der das mindestens eine Kriterium erfüllende Betrieb der Paarung bestehend aus Sauggerät und Hand-Werkzeugmaschine möglich ist. Der Bediener erhält also eine Rückkoppelung, welche Informationen ausgetauscht werden und/oder wie ein späterer Betrieb möglich ist. Wenn beispielsweise das Sauggerät und die Hand-Werkzeugmaschine zueinander passen, kann eine beispielsweise grüne Leuchtanzeige oder dergleichen als ein optisches Ausgabemittel aktiviert werden. Ein solches Ausgabemittel kann bei der Hand-Werkzeugmaschine und/oder bei dem Sauggerät, beispielsweise an der Sauggerät-Kommunikationseinrichtung und/oder bei der Extern-Kommunikationseinrichtung, vorgesehen sein.

Eine bevorzugte Ausführungsform der Erfindung sieht vor, dass das Sauggerät und/oder die Hand-Werkzeugmaschine so ausgestaltet sind, dass sie einen Betrieb mit dem jeweils anderen Gerät blockieren, wenn das mindestens eine Kriterium nicht erfüllbar ist. Wenn also beispielsweise das Sauggerät erkennt, dass die Hand-Werkzeugmaschine zu viele Partikel produzieren würde, die dann nicht absaugbar sind, kann das Sauggerät seinen Betrieb blockieren. Auch die Hand-Werkzeugmaschine kann einen Betrieb blockieren, wenn das Kriterium nicht erfüllbar ist oder nicht erfüllt ist.

Wenn der Betrieb von Sauggerät und Hand-Werkzeugmaschine zwar möglich ist, jedoch bestimmte Betriebs- oder Funktionsparameter dazu notwendig sind, damit ein optimaler Betrieb möglich ist, ist es vorteilhaft, wenn das Sauggerät und/oder die Hand-Werkzeugmaschine dazu ausgestaltet sind, einen oder mehrere Parameter für eine Funktion des Sauggeräts oder der Hand-Werkzeugmaschine entsprechend dem mindestens einen Kriterium einzustellen. Somit kann also beispielsweise das Sauggerät seine Saugleistung an die Hand-Werkzeugmaschine anpassen. Auch die Hand-Werkzeugmaschine ist vorteilhaft so ausgestaltet, dass sie beispielsweise nur in einem solchen Drehzahlbereich oder Arbeitsbereich benutzbar ist, dass das Sauggerät noch in der Lage ist, anfallende Partikel in einem dem Kriterium entsprechenden Umfang abzusaugen. Selbstverständlich kann auch ein Abreinigungsfunktion zur Abreinigung eines Filters des Sauggeräts anhand des Arbeitsparameters eingestellt werden, so dass das mindestens eine Kriterium erfüllt ist.

An dieser Stelle sei bemerkt, dass eine Ausführungsform der Erfindung vorsieht, dass die Hand-Werkzeugmaschine anhand der vom Sauggerät erhaltenen Daten seine eigenen Betriebsparameter einstellt, d.h. beispielsweise einen Drehzahlbereich definiert, oder das Sauggerät anhand der von der Hand-Werkzeugmaschine erhaltenen Daten seine eigenen Betriebsparameter, beispielsweise Abreinigungsintervalle, Saugleistung und dergleichen, einstellt. Es ist aber auch möglich, dass das eine Gerät die Betriebsparameter des anderen Geräts modifiziert und/oder entsprechende Steuersignale sendet. Somit kann also beispielsweise das Sauggerät an die Hand-Werkzeugmaschine Betriebsparameter senden, die es der Hand-Werkzeugmaschine anhand der empfangenen Identifikationskennung der Hand-Werkzeugmaschine oder der empfangenen Betriebsparameter der Hand-Werkzeugmaschine vorgibt.

Die Identifikationskennung kann als eine solche Identifikationskennung ausgestaltet sein, dass sie das Sauggerät oder die Hand-Werkzeugmaschine jeweils eindeutig zu kennzeichnen, das aus der Identifikationskennung Betriebsdaten der Hand-Werkzeugmaschine bzw. Sauggeräts, zum Beispiel Leistungsdaten, Leistungsanforderungen oder dergleichen, ableitbar sind. Beispielsweise kann die Identifikationskennung den jeweiligen Typ des Sauggeräts oder Hand-Werkzeugmaschine angeben. Aber auch eine eindeutige, sozusagen weltweit nur einmal auftretende Kennung ist möglich. Selbstverständlich kann die Identifikationskennung auch mehrteilig sein, das so dass sie beispielsweise zum einen eine Typkennung des jeweiligen Geräts, zum andern auch eine eindeutige Serienkennung oder Seriennummer umfasst.

Bezüglich des mindestens einen Betriebsparameters ist es möglich, dass er beispielsweise ein Werkzeugmaschinen-Betriebsparameter der Hand-Werkzeugmaschine ist, der einen bei einem Betrieb der Hand-Werkzeugmaschine möglichen oder aktuellen Betriebszustand repräsentiert. Beispielsweise repräsentiert der Betriebsparameter eine beim Betrieb der Hand-Werkzeugmaschine typischerweise oder aktuell anfallende maximale Partikelmenge, eine typische Beschaffenheit der Partikel oder dergleichen.

Ein dem Sauggerät zugeordneter Betriebsparameter bildet zweckmäßigerweise einen Sauggerät-Betriebsparameter, der einen beim Betrieb des Sauggeräts aktuell oder möglicherweise auftretenden Betriebszustand repräsentiert. Der Sauggerät-Betriebsparameter oder die Sauggerät-Identifikationskennung können beispielsweise eine Saugleistung des Saugmotors und/oder eine maximale Größe des Saugstroms und/oder eine noch vorhandene Aufnahmekapazität für Partikel im Staubsammelraum oder in einem Filter innerhalb des Staubsammelraums angeben.

Das Sauggerät ist zweckmäßigerweise zur Einstellung mindestens einer Funktion des Sauggeräts und/oder der Hand-Werkzeugmaschine anhand der mindestens einen Identifikationskennung und/oder des Betriebsparameters ausgestaltet. Hierbei kann es sich um eine empfangene oder eine zu sendende Identifikationskennung bzw. um einen empfangenen oder gesendeten Betriebsparameter handeln. Das Sauggerät ist beispielsweise zur Einstellung einer Saugleistung des Saugmotors und/oder eines Größe des Saugstroms und/oder einer Abreinigungsfunktion zum Abreinigen eines Filters des Sauggeräts anhand der mindestens einen empfangenen Identifikationskennung und/oder eines empfangenen Betriebsparameters ausgestaltet.

Beispielsweise ist das Sauggerät dazu ausgestaltet, anhand des von der Hand-Werkzeugmaschine empfangenen Betriebsparameters oder der Identifikationskennung eine eigene Funktion am Sauggerät selbst einzustellen, zum Beispiel eine Saugleistung des Saugmotors, eine Größe des Saugstroms, eine Abreinigungsfunktion zum Abreinigen eines Filters oder dergleichen. Das Sauggerät ist in einer weiteren Ausgestaltung jedoch auch sozusagen als die Hand-Werkzeugmaschine steuernde Einrichtung ausgestaltet, d.h. dass die Sauggerät-Kommunikationseinrichtung beispielsweise zum Senden eines anhand des empfangenen Betriebsparameters und/oder anhand der empfangenen Identifikationskennung gebildeten Steuersignals und/oder Meldesignals an die Extern-Kommunikationseinrichtung ausgestaltet ist, die mit der Hand-Werkzeugmaschine verbunden ist oder einen Teil der Hand-Werkzeugmaschine bildet. Mithilfe des Steuersignals kann beispielsweise eine Funktion der Hand-Werkzeugmaschine angesteuert werden, zum Beispiel der Antriebsmotor der Hand-Werkzeugmaschine. Das Meldesignal eignet sich beispielsweise dazu, eine von der Sauggerät-Kommunikationseinrichtung oder dem Sauggerät ermittelte Information, zum Beispiel einem Warnhinweis auszugeben. Dazu sind die vorgenannten akustischen und/oder optischen Ausgabemittel zweckmäßig.

Das Sauggerät weist zweckmäßigerweise nämlich einen am Sauggerät, zum Beispiel dessen Gehäuse, oder an Bord der Sauggerät-Kommunikationseinrichtung angeordnetes Ausgabemittel zur Ausgabe einer anhand des empfangenen Betriebsparameters und richtig oder der empfangenen Identifikationskennung ermittelten Information auf. Beispielsweise kann das Sauggerät akustisch oder optisch anzeigen, wenn die Hand-Werkzeugmaschine zusammen mit dem Sauggerät betrieben werden kann. Selbstverständlich können auch andere Informationen ausgegeben werden.

Die Extern-Kommunikationseinrichtung kann beispielsweise als ein Bestandteil der Hand-Werkzeugmaschine ausgestaltet sein oder als ein Modul, das mit der Hand-Werkzeugmaschine verbindbar ist. Beispielsweise hat die Hand-Werkzeugmaschine einen Modulschacht, in die Extern-Kommunikationseinrichtung eingesteckt werden kann. Die Extern-Kommunikationseinrichtung kann beispielsweise auch einen Bestandteil eines Energiespeichermoduls, zum Beispiel eines Akku-Moduls, zur elektrischen Energieversorgung der Hand-Werkzeugmaschine bilden.

Die Extern-Kommunikationseinrichtung kann auch beispielsweise an einem von einem Gehäuse des Sauggeräts entfernten Ende eines Saugschlauchs angeordnet sein. Der Saugschlauch ist mit der Hand-Werkzeugmaschine verbunden, so dass auch die z.B. als Modul ausgestaltete Extern-Kommunikationseinrichtung somit mit der Hand-Werkzeugmaschine verbunden ist. Beispielsweise kann vorgesehen sein, dass die Extern-Kommunikationseinrichtung und die Sauggerät-Kommunikationseinrichtung drahtlos oder leitungslos miteinander kommunizieren. Zwischen der Extern-Kommunikationseinrichtung und der Hand-Werkzeugmaschine, beispielsweise deren Steuereinrichtung, kann dann eine Leitung und/oder eine weitere drahtlose Kommunikation vorgesehen sein.

Die Extern-Kommunikationseinrichtung ist zweckmäßigerweise zur Einstellung mindestens einer Funktion des Sauggeräts oder der Hand-Werkzeugmaschine oder beiden anhand der mindestens einen Identifikationskennung oder des Betriebsparameters oder beiden ausgestaltet. Die Funktion kann die Extern-Kommunikationseinrichtung beispielsweise anhand eines empfangenen oder an Bord der Hand-Werkzeugmaschine vorhandenen Betriebsparameters ebenso wie anhand einer vom Sauggerät empfangenen Identifikationskennung oder der Identifikationskennung der Hand-Werkzeugmaschine einstellen.

Die Extern-Kommunikationseinrichtung ist zweckmäßigerweise zum Senden eines anhand des empfangenen Betriebsparameters oder der empfangenen Identifikationskennung gebildeten Steuersignals zur Einstellung mindestens einer Funktion des Sauggeräts, beispielsweise zur Einstellung einer Saugleistung des Saugmotors, eine Größe des Saugstroms oder Volumenstroms, Intervallen von Abreinigung Funktion des Sauggeräts oder dergleichen, ausgestaltet. Vorteilhaft ist es auch, wenn die Extern-Kommunikationseinrichtung zum Senden eines Meldesignals an die Sauggerät-Kommunikationseinrichtung zur Ausgabe einer Information, zum Beispiel eines Hinweises, ausgestaltet ist. Diese Information wird beispielsweise von der Extern-Kommunikationseinrichtung oder dem Sauggerät oder beiden in Zusammenwirkung miteinander ermittelt.

Die Extern-Kommunikationseinrichtung ist vorteilhaft zum Empfang einer Identifikationskennung oder des Betriebsparameters von einer Steuereinrichtung der Hand-Werkzeugmaschine ausgestaltet. Die Steuereinrichtung der Hand-Werkzeugmaschine ermittelt also die Kennung oder den Betriebsparameters und sendet diesen zur Weiterverarbeitung an die Extern-Kommunikationseinrichtung. Auch in umgekehrter Richtung ist es möglich, dass die Extern-Kommunikationseinrichtung der Steuereinrichtung der Hand-Werkzeugmaschine kommuniziert, d.h. dass sie eine vom Sauggerät empfangene Identifikationskennung oder einen vom Sauggerät empfangenen Betriebsparameter an die Steuereinrichtung der Hand-Werkzeugmaschine weiterleitet.

Das erfindungsgemäße Sauggerät ist zweckmäßigerweise ein mobiles Sauggerät. Das Sauggerät weist vorzugsweise Rollen zum Fahren auf einem Untergrund auf. Selbstverständlich könnte das Sauggerät auch ein tragbares Sauggerät sein, das Rollen aufweist oder auch keine Rollen hat. Das Sauggerät gemäß der Erfindung ist zweckmäßigerweise nicht als ein autarkes, in der Art eines Roboters arbeitendes Sauggerät ausgestaltet. Das Sauggerät kann vom Bediener mitgenommen und vor Ort eingesetzt werden. Weiterhin ist an das Sauggerät zweckmäßigerweise ein Saugschlauch anschließbar.

Es ist bevorzugt, wenn keine Leitungsverbindung zwischen dem Sauggerät und der Extern-Kommunikationseinrichtung notwendig ist. Die Extern-Kommunikationseinrichtung und die Sauggerät-Kommunikationseinrichtung können dementsprechend einen oder mehrere Betriebsparameter und/oder einen oder mehrere Identifikationskennungen und/oder Steuersignale und/oder Meldesignale oder dergleichen leitungslos vom Sauggerät zum Hand-Werkzeug und/oder umgekehrt übermitteln.

Leitungslos ist so zu verstehen, dass zwischen den Kommunikationseinrichtungen keine elektrische oder optische Leitung notwendig ist. In anderer Formulierung könnte man auch drahtlos sagen. Leitungsgebunden kann dementsprechend auch als drahtgebunden verstanden werden, wenn zum Beispiel eine elektrische Drahtverbindung zwischen den Kommunikationseinrichtungen vorhanden ist. Auch ein optischer Leiter ist als Leitung möglich. Die mindestens eine Leitung zwischen den Kommunikationseinrichtungen kann an oder in einem Saugschlauch zwischen der Hand-Werkzeugmaschine und dem Sauggerät angeordnet sein.

Es ist möglich, dass zwischen der Hand-Werkzeugmaschine bzw. der Extern-Kommunikationseinrichtung und der Sauggerät-Kommunikationseinrichtung eine Leitungs-Schnittstelle vorgesehen ist, die nur im Rahmen einer Identifikationsprozedur verwendet wird, bei der sich die beiden Geräte sozusagen aufeinander einstellen oder ein Betrieb miteinander freigegeben und anschließend die leitungsgebundene Schnittstelle wieder getrennt wird, so dass die Hand-Werkzeugmaschine frei vom Sauggerät bewegt werden kann.

Eine Leitungsverbindung zwischen dem Sauggerät und der Hand-Werkzeugmaschine kann beispielsweise in einem Saugschlauch, der die beiden Geräte miteinander verbindet, verlaufen.

Bei der leitungslosen Kommunikation kann die Extern-Kommunikationseinrichtung frei bewegt werden, beispielsweise um das Sauggerät einzuschalten, auszuschalten oder dessen Leistung zu steuern, beispielsweise die Saugleistung zu erhöhen oder zu senken. Auch die Übertragung von Meldungen ist leitungslos vereinfacht. Das leitungslose Übertragungskonzept ist von der Extern-Kommunikationseinrichtung zum Sauggerät oder umgekehrt oder beides möglich. Es versteht sich, dass in einer Richtung auch eine leitungsgebundene Übertragung zwischen Sauggerät und Extern-Kommunikationseinrichtung möglich ist.

Ein Steuersignal oder Meldesignal kann beispielsweise nur ein einziger elektrischer oder optischer Impuls sein, zum Beispiel ein Einschaltsignal und ein Ausschaltsignal, aber auch eine Impulsfolge oder dergleichen. Bevorzugt umfasst ein jeweiliges Signal auch komplexere Nachrichten oder Telegramme, die auch umfangreichere Informationen, beispielsweise Konfigurationsdaten, Parametrierungsdaten, Identifikationsdaten, Betriebsparameter oder dergleichen umfassen.

Bei den leitungslos übermittelten oder übermittelbaren Informationen, beispielsweise der Identifikationskennung oder des Betriebsparameters, der Steuersignale und/oder Meldesignale handelt es sich beispielsweise um Funksignale oder optische Signale oder beides. Beispielsweise können die Kommunikationsmittel der Sauggerät-Kommunikationseinrichtung und der Extern-Kommunikationseinrichtung beispielsweise optische Kommunikationsmittel oder Funk-Kommunikationsmittel umfassen. Die Kommunikationsschnittstelle der Sauggerät-Kommunikationseinrichtung und/oder der Extern-Kommunikationseinrichtung können beispielsweise ein WLAN umfassen. So sind beispielsweise Infrarot-Signale möglich. Eine Sichtverbindung ist jedoch nicht notwendig, wenn die leitungslosen Meldesignale und/oder Steuersignale Funksignale sind oder umfassen. Es ist bevorzugt, wenn die Funksignale nur in einem Nahbereich von beispielsweise bis maximal 2-8 m vom Sauggerät empfangbar sind, so dass eine Störung durch andere Extern-Kommunikationseinrichtungen nicht zu befürchten ist. In der Regel reicht ein solcher Nahbereich auch aus, da das Sauggerät auch am Ort der Extern-Kommunikationseinrichtung benötigt wird, wo Staubpartikeln anfallen.

Die Sauggerät-Kommunikationseinrichtung kann zur leitungslosen und/oder leitungsgebundenen Kommunikation mit weiteren Komponenten des Sauggeräts ausgestaltet sein. Die Sauggerät-Kommunikationseinrichtung erhält beispielsweise von einer Steuereinrichtung des Sauggeräts Informationen, die sie als ein Meldesignal oder Steuersignal an die Extern-Kommunikationseinrichtung sendet. Es ist auch möglich, dass die Sauggerät-Kommunikationseinrichtung von der Extern-Kommunikationseinrichtung empfangene Meldesignale und/oder Steuersignale leitungsgebunden oder leitungslos an eine weitere Komponente, beispielsweise die vorgenannte Steuereinrichtung, des Sauggeräts weiterleitet. Selbst verständlich kann die Sauggerät-Kommunikationseinrichtung auch eine darüber hinausgehende Intelligenz aufweisen oder weitere Komponenten umfassen, beispielsweise mindestens ein elektrisches Stell- oder Schaltelement zum Stellen oder Schalten beispielsweise des Saugmotors und/oder mindestens einen Sensor oder eine Messeinrichtung zum Erfassen eines Betriebszustandes des Sauggeräts.

Die Sauggerät-Kommunikationseinrichtung kann einen integralen Bestandteil des Sauggeräts bilden.

Bevorzugt bildet die Sauggerät-Kommunikationseinrichtung ein Sauggerät-Kommunikationsmodul oder umfasst ein Sauggerät-Kommunikationsmodul, in dem z.B. der Sauggerät-Empfänger und/oder der Sauggerät-Sender angeordnet ist. An dem Saugergehäuse ist zweckmäßigerweise eine Modulaufnahme für das Sauggerät-Kommunikationsmodul vorhanden, mit der das Sauggerät-Kommunikationsmodul lösbar verbindbar ist. Beispielsweise handelt es sich dabei um einen Modulschacht, in den das Sauggerät-Kommunikationsmodul einsteckbar ist.

Die Modulaufnahme umfasst zweckmäßigerweise elektrische Modul-Kontakte zu elektrischen Verbindung des Sauggerät-Kommunikationsmoduls mit in dem Saugergehäuse angeordneten elektrischen Komponenten des Sauggeräts. Es ist aber auch möglich, dass das Sauggerät-Kommunikationsmodul mit den übrigen Komponenten im Innern des Saugergehäuses leitungslos kommuniziert. Bei dieser Ausführungsform sind zweckmäßigerweise leitungslose Kommunikationsmittel, beispielsweise ein Sender und ein Empfänger, vorgesehen, mit denen das Sauggerät-Kommunikationsmodul mit mindestens einer in dem Saugergehäuse angeordneten elektrischen Komponente der Sauggerät-Kommunikationseinrichtung kommuniziert. Beispielsweise überträgt das Sauggerät-Kommunikationsmodul die Steuersignale, die es seinerseits leitungslos von der Steuereinrichtung empfangen hat, an die im Saugergehäuse angeordnete elektrische Komponente oder generiert ein Sauggerät-Kommunikationssignal daraus. Bei dieser elektrischen Komponente handelt es sich beispielsweise um einen elektrischen Schalter, eine Leistungsregelung oder dergleichen.

Das erfindungsgemäße Sauggerät umfasst zweckmäßigerweise eine Ladeeinrichtung zum Aufladen eines elektrischen Energiespeichermoduls einer Hand-Werkzeugmaschine. Die Ladeeinrichtung weist elektrische Ladekontakte zur Bereitstellung einer Ladespannung für das elektrische Energiespeichermodul auf.

Die Sauggerät-Kommunikationseinrichtung bildet zweckmäßigerweise einen Bestandteil der Ladeeinrichtung.

Bevorzugt ist eine so genannte Lernfunktion, bei der die Extern-Kommunikationseinrichtung und die Sauggerät-Kommunikationseinrichtung des Sauggeräts zur Bildung eines Sender-Empfänger-Paares miteinander kommunizieren. Im Rahmen dieses Lernprozesses, auch als Teach-Prozess bezeichnet, wird sichergestellt, dass nur einander zugeordnete Extern-Sender und Sauggerät-Empfänger oder Extern-Empfänger und Sauggerät-Sender miteinander kommunizieren. Beispielsweise kommunizieren die Sauggerät-Kommunikationseinrichtung und die Extern-Kommunikationseinrichtung im Rahmen einer Anmeldeprozedur Übertragungsparameter und/oder Authentifizierungsparametern und/oder Zugangscodes oder dergleichen. Es ist zum Beispiel möglich, dass ein Bediener auf eine Taste an der Extern-Kommunikationseinrichtung und/oder der Sauggerät-Kommunikationseinrichtung drückt, so dass diese in an sich bekannter Weise eine Kommunikationsbeziehung eingehen.

Das Sauggerät bildet zweckmäßigerweise einen Bestandteil eines Systems, das auch die Extern-Kommunikationseinrichtung umfasst. Die Extern-Kommunikationseinrichtung kann jedoch auch eine separate, beispielsweise schon ab Werk in eine Hand-Werkzeugmaschine oder deren Energiespeichermodul eingebaute Extern-Kommunikationseinrichtung sein.

Die nachfolgenden Ausführungen beziehen sich auf eine Extern-Kommunikationseinrichtung, die beispielsweise einen Bestandteil eines Systems bildet, das neben dem Sauggerät auch die Extern-Kommunikationseinrichtung umfasst oder auch auf eine Extern-Kommunikationseinrichtung, die als ein separates Kommunikationsmodul beispielsweise zur Nachrüstung eines Energiespeichermoduls oder einer Hand-Werkzeugmaschine ausgestaltet ist oder zur Montage an einem Saugschlauch vorgesehen ist. Ferner kann die Extern-Kommunikationseinrichtung auch einen integralen Bestandteil einer Hand-Werkzeugmaschine oder eines Energiespeichermoduls bilden. Sie kann auch als ein zwischen ein Energiespeichermodul und eine Hand-Werkzeugmaschine einbaubares Zwischenmodul ausgestaltet sein.

Bevorzugt hat die Extern-Kommunikationseinrichtung mindestens einen Sensor und ist zum Senden der Steuersignale zur Ansteuerung, beispielsweise zum Einschalten oder Ausschalten des Saugmotors, in Abhängigkeit von Sensorsignalen des Sensors ausgestaltet.

Bei der Wahl des Sensors sind viele Möglichkeiten gegeben:
Beispielsweise wird der mindestens eine Sensor von einem Lagesensor gebildet oder umfasst einen Lagesensor, der zur Erfassung einer Lage der Extern-Kommunikationseinrichtung geeignet ist. Bei einer Lageveränderung kann der Lagesensor beispielsweise ein entsprechendes Startsignal senden, worauf die Extern-Kommunikationseinrichtung das leitungslosen Steuersignale zum Einschalten des Saugmotors sendet.

Es ist auch möglich, dass der mindestens eine Sensor einen Bewegungssensor zur Erfassung einer Bewegung der Extern-Kommunikationseinrichtung umfasst.

Auch ein elektrischer Sensor, der zur Erfassung eines elektrischen Stromflusses zu einem zusammen mit dem Sauggerät betriebenen elektrischen Gerät umfasst, und/oder ein Spannungssensor zur Erfassung einer an dem Gerät anliegenden elektrischen Versorgungsspannung sind vorteilhaft. Somit generiert die Extern-Kommunikationseinrichtung also beispielsweise dann, wenn die Extern-Kommunikationseinrichtung vibriert (zum Beispiel wenn die Hand-Werkzeugmaschine läuft) ein Steuersignal zum Einschalten des Saugmotors. Auch wenn eine Arbeitsfeldbeleuchtung eingeschaltet wird, deren Stromfluss der Stromsensor erfasst, kann auf diesem Wege der Saugmotor eingeschaltet werden.

Das Sauggerät ist zweckmäßigerweise zur Zusammenwirkung mit einer Hand-Werkzeugmaschine vorgesehen, die einen Antriebsmotor zum Antreiben eines Werkzeugs aufweist. Der Antriebsmotor ist beispielsweise ein pneumatischer Motor oder ein elektrischer Motor. Das Sauggerät ist zum Absaugen von beim Betrieb der Hand-Werkzeugmaschine erzeugten Partikeln vorgesehen. Der mindestens eine Sensor ist vorteilhaft zur Erfassung eines Betriebs des Antriebsmotors oder der Hand-Werkzeugmaschine ausgestaltet. Das Sauggerät bildet beispielsweise eine Komponente eines solchen Systems, das das Sauggerät und die Hand-Werkzeugmaschine umfasst.

Im Zusammenhang mit einer solchen Hand-Werkzeugmaschine ist es vorteilhaft, wenn der mindestens eine Sensor einen Stromsensor zur Erfassung eines elektrischen Stromflusses zu einem elektrischen Verbraucher der Hand-Werkzeugmaschine, wenn diese in Betrieb ist, beispielsweise zu dem Antriebsmotor der Hand-Werkzeugmaschine oder einer Arbeitsfeldbeleuchtung der Hand-Werkzeugmaschine, und/oder einen Spannungssensor zu einer Erfassung einer jeweils an dem bei Betrieb der Hand-Werkzeugmaschine aktiven elektrischen Verbraucher anliegenden Versorgungsspannung umfasst. Wenn also der Antriebsmotor betrieben wird, wird dies vom Sensor erkannt und dementsprechend werden von der Extern-Kommunikationseinrichtung leitungslose Steuersignale zum Einschalten oder zur Erhöhung einer Leistung des Saugmotors generiert.

Selbstverständlich kann auch ein Drehzahlsensor vorgesehen sein, der eine Drehzahl des Antriebsmotors erfasst. Wenn der Antriebsmotor nicht dreht, sendet die Extern-Kommunikationseinrichtung ein entsprechendes Steuersignal, worauf Sauggerät-Kommunikationseinrichtung und/oder der Sauggerät-Empfänger bzw. die an Bord des Sauggeräts befindliche Sauggerät-Schalteinrichtung den Saugmotor abschaltet. Auch eine leistungsabhängige Steuerung ist möglich. Wenn also beispielsweise der Antriebsmotor der Hand-Werkzeugmaschine schneller dreht, arbeitet das Werkzeug entsprechend schneller, so dass mehr Partikel weg zu fördern sind. Dann steuert die Sauggerät-Kommunikationseinrichtung den Saugmotor des Sauggeräts vorteilhaft zu einer höheren Leistung an. Es ist aber auch möglich, dass gerade das Umgekehrte stattfindet, das heißt dass beispielsweise bei einem Drehzahl-Einbruch die Leistung des Saugmotors erhöht wird, weil dann ein entsprechend höherer Spanabtrag oder dergleichen andere höhere Partikelerzeugung am Arbeitsort zu befürchten ist, das Sauggerät also entsprechend mehr Saugleistung bringen sollte.

Es auch möglich, dass der Sensor, der an Bord der Hand-Werkzeugmaschine ist, beispielsweise ein Magnetfeld des Antriebsmotors erfasst, also einen magnetischen Sensor umfasst. Der Magnetsensor kann auch zur Erfassung einer Schaltstellung eines Schalters der Hand-Werkzeugmaschine vorgesehen sein, mit dem der Antriebsmotor schaltbar ist oder dessen Leistung beeinflussbar ist.

Die Extern-Kommunikationseinrichtung kann auch einen elektrischen Kontakt oder einen Positionssensor zur Erfassung einer Schaltstellung eines Schalters der Hand-Werkzeugmaschine, beispielsweise eines Drucktasters, zum Schalten oder zur Leistungssteuerung des Antriebsmotors umfassen.

Die Extern-Kommunikationseinrichtung ist zweckmäßigerweise als ein zwischen ein Gehäuse der Hand-Werkzeugmaschine und ein Energiespeichermodul zur elektrischen Stromversorgung der Hand-Werkzeugmaschine anordenbares Zwischenmodul ausgestaltet. Somit ist also eine besonders einfache Ausführungsform gegeben, bei der eine an sich bekannte Hand-Werkzeugmaschine zusammen mit einem ebenfalls bekannten Energiespeichermodul verwendet werden kann, die zwischengeschaltete Extern-Kommunikationseinrichtung jedoch beispielsweise einen Stromfluss zwischen dem Energiespeichermodul und der Hand-Werkzeugmaschine erfasst und dementsprechend die leitungslosen Steuersignale zum Einschalten, Ausschalten oder zur Leistungssteuerung des Saugmotors generiert. Selbstverständlich kann auch bei dieser Ausführungsform eine andere Art von sensorische Erfassung eines Betriebs der Hand-Werkzeugmaschine erfolgen, beispielsweise eine Erfassung einer Vibration, einer Bewegung, einer Lageänderung oder dergleichen. Ein solche Zwischenmodul kann beispielsweise zwischen vorhandene Kontakte der Hand-Werkzeugmaschine und des Energiespeichermoduls gesteckt werden und ein eigenes Zwischenmodul-Gehäuse aufweisen. Bevorzugt sind bei dem Zwischenmodul Formschlusskonturen bzw. Steck-Verbindungsmittel vorgesehen, die mit entsprechenden Formschlusskonturen bzw. Steck-Verbindungsmitteln der Hand-Werkzeugmaschine bzw. dem Energiespeichermodul korrespondieren bzw. dazu passen.

Eine andere, bevorzugte Ausführungsform sieht vor, das die Extern-Kommunikationseinrichtung einen integralen Bestandteil einer Hand-Werkzeugmaschine oder eines Energiespeichermoduls zur elektrischen Versorgung einer Hand-Werkzeugmaschine bildet.

Es ist aber auch möglich, dass die Extern-Kommunikationseinrichtung nachträglich an einem externen Gerät, beispielsweise einem vorgenannten Energiespeichermodul, an einer Hand-Werkzeugmaschine oder dergleichen, befestigt wird oder auch beispielsweise am Saugschlauch des Sauggerätes. Dazu hat die Extern-Kommunikationseinrichtung bevorzugt Befestigungsmittel, beispielsweise eines oder mehrere Bänder, magnetische Befestigungsmittel, Rastverbindungsmittel oder dergleichen.

Es versteht sich, dass die Extern-Kommunikationseinrichtung an eine andere Komponente, zum Beispiel die Hand-Werkzeugmaschine oder ein Energiespeichermodul für deren elektrische Energieversorgung, auch beispielsweise angeschraubt und/oder angeklebt werden kann.

Die Extern-Kommunikationseinrichtung kann beispielsweise auch als ein Aufsatz, der auf einen Druckschalter einer Hand-Werkzeugmaschine aufgesetzt wird, ausgestaltet sein oder einen solchen Aufsatz aufweisen.

Die Extern-Kommunikationseinrichtung weist vorzugsweise eine Schnittstelle zur drahtlosen und/oder drahtgebundenen Kommunikation der Hand-Werkzeugmaschine, insbesondere mit deren Steuereinrichtung, und/oder eine Schalteinrichtung zum Schalten einer elektrischen Versorgungsspannung der Hand-Werkzeugmaschine auf. Somit kann die Kommunikationseinrichtung sozusagen die Stromversorgung, alternativ auch eine Druckluftversorgung, der Hand-Werkzeugmaschine abschalten, einschalten oder steuern. Diese Variante ist insbesondere dann vorteilhaft, wenn die Kommunikationseinrichtung an Bord des Energiespeichermoduls angeordnet ist. Die Hand-Werkzeugmaschine und die Extern-Kommunikationseinrichtung kommunizieren beispielsweise über zueinander passende Drahtlos-Schnittstellen, beispielsweise Funk-Schnittstellen, miteinander und/oder haben zueinander passende Modulkontakte, so dass eine drahtgebundene oder leitungsgebundene Kommunikation möglich ist.

Für einen autarken Betrieb der Extern-Kommunikationseinrichtung ist es vorteilhaft, wenn sie einen elektrischen Energiespeicher, beispielsweise eine Batterie, einen Akku oder dergleichen hat. Ferner ist es vorteilhaft, wenn sie eine Energieerzeugungseinheit aufweist, beispielsweise einen elektrischen Generator, der durch den Saugstrom antreibbar ist, durch Bewegungen der Extern-Kommunikationseinrichtung oder dergleichen.

Nachfolgend werden Ausführungsbeispiele der Erfindung anhand der Zeichnung erläutert. Es zeigen:
- Figur 1: eine perspektivische Ansicht eines Systems umfassend ein Sauggerät sowie eine mit einem elektrischen Energiespeichermodul versehene Hand-Werkzeugmaschine in Gestalt einer Säge, insbesondere einer Stichsäge,

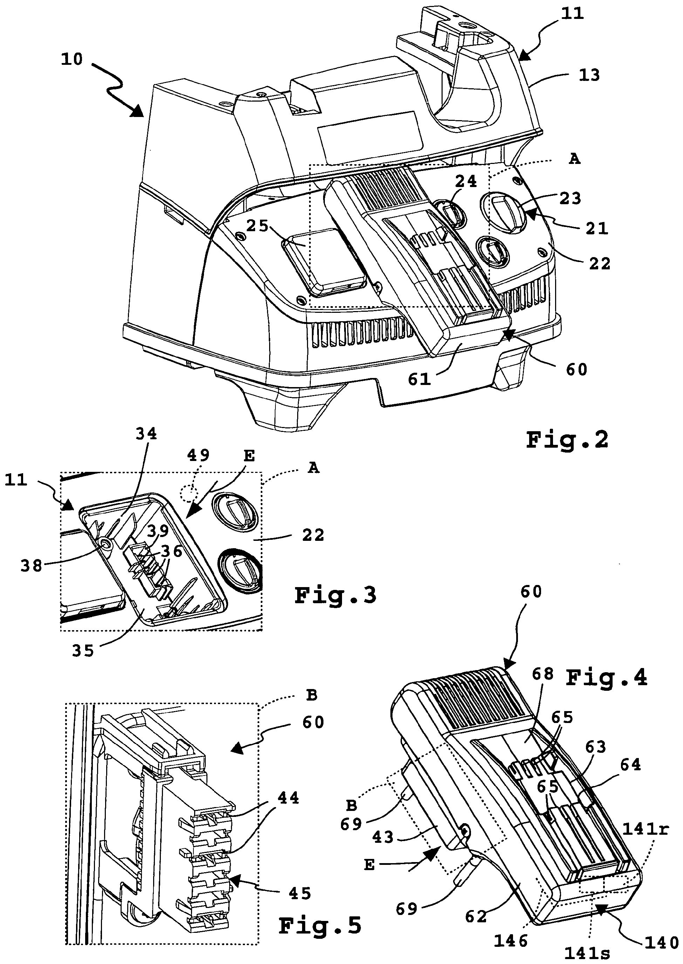

- Figur 2: eine perspektivische Schrägansicht auf einen oberen Teil eines Saugergehäuses des Sauggeräts gemäß Figur 1, das eine Ladeeinrichtung aufweist,
- Figur 3: das Saugergehäuse gemäß Figur 2, jedoch ohne Ladeeinrichtung, so dass eine Modulaufnahme sichtbar ist, etwa entsprechend einem Ausschnitt A in Figur 2,
- Figur 4: die Ladeeinrichtung gemäß Figur 2, jedoch von dem Sauggerät entfernt,
- Figur 5: Modul-Kontakte der Ladeeinrichtung gemäß Figur 4, etwa entsprechend einem Ausschnitt B in Figur 4,
- Figur 6: eine Ansicht etwa entsprechend der Ansicht gemäß Figur 2, jedoch mit einem am an der Ladeeinrichtung angeordneten Energiespeichermodul, das in
- Figur 7: von schräg oben dargestellt ist und in
- Figur 8: an einer Hand-Werkzeugmaschine in Gestalt eines Schraubgeräts oder Bohrgeräts montiert ist,

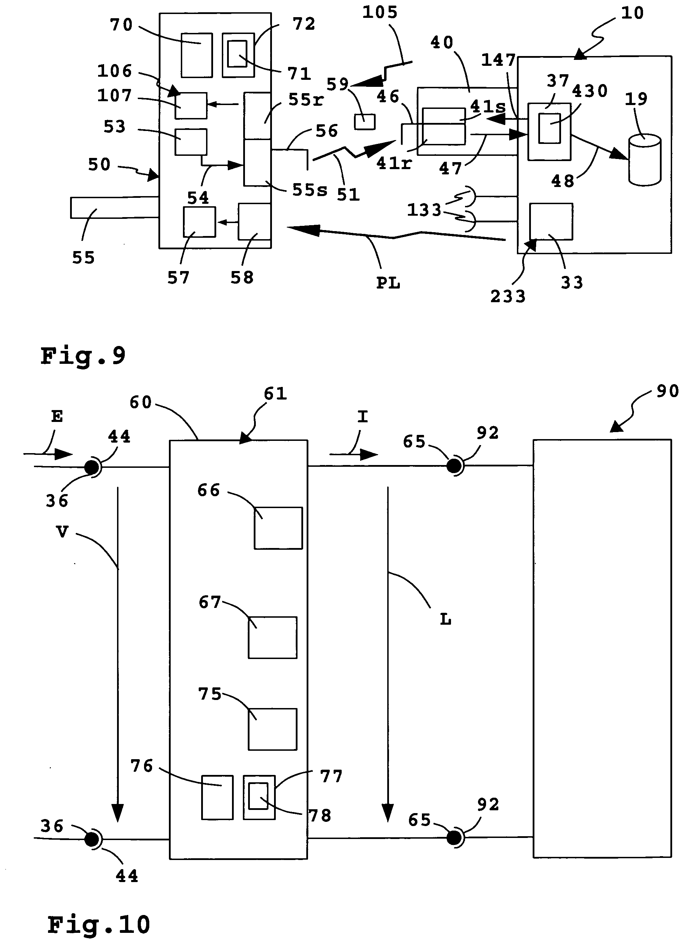

- Figur 9: ein elektrisches Schaltbild einer zur Verdeutlichung einer leitungslosen Ansteuerung des Sauggeräts gemäß Figur 1 und
- Figur 10: ein elektrisches Schaltbild zur Verdeutlichung eines Ladekonzepts zum Aufladen eines elektrischen Energiespeichermoduls mithilfe des Sauggeräts gemäß Figur 1, das entsprechend Figur 2 eine Ladeeinrichtung aufweist.

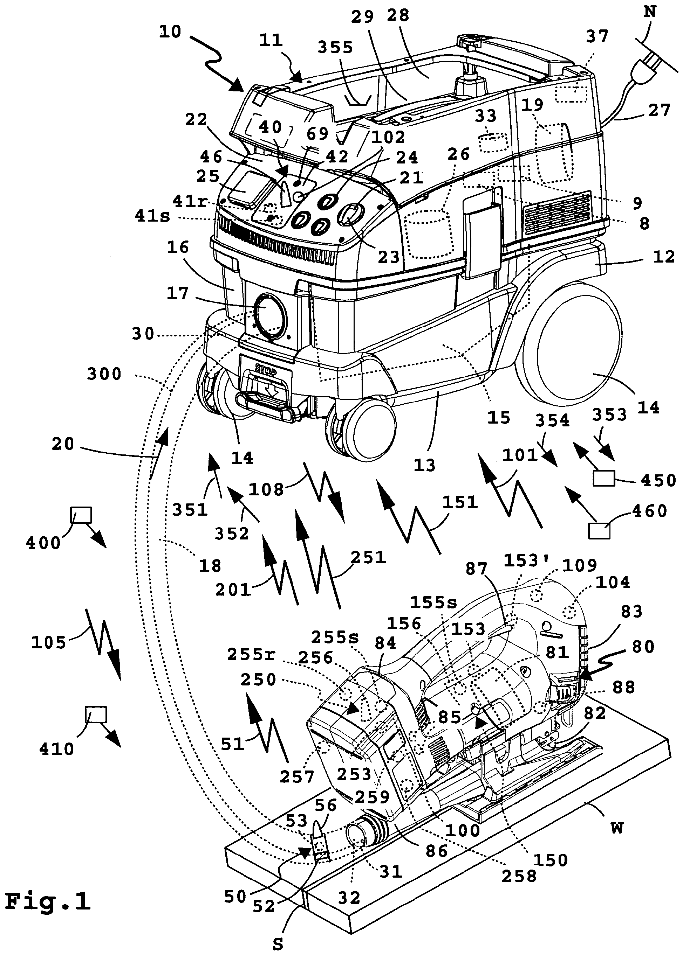

Ein Sauggerät 10 weist ein Saugergehäuse 11 auf. Das Saugergehäuse 11 umfasst ein Unterteil 12 sowie ein Oberteil 13, das lösbar mit dem Unterteil 12 verbindbar ist. An dem Saugergehäuse 11 sind Rollen 14 angeordnet, von denen die in Figur 1 vorderen Rollen 14 Lenkrollen sind. In dem Saugergehäuse 11 ist ein Staubsammelraum 15 vorgesehen, beispielsweise eine Aufnahmewanne. In dem Staubsammelraum 15 kann beispielsweise einen Filtersack.angeordnet werden, wobei das Sauggerät 10 auch ohne Filtersack nutzbar sein kann. Der Staubsammelraum 15 ist in dem Unterteil 12 vorgesehen. An einer Vorderwand 16 des Saugergehäuses 11 ist ein Saugeinlass 17 vorgesehen, an den ein Saugschlauch 18 anschließbar ist. Der Saugeinlass 17 mündet in den Staubsammelraum 15.

Die elektrischen Komponenten des Sauggeräts 10 sind in dem Saugergehäuse 11 geschützt untergebracht. Bevorzugt sind die elektrischen Komponenten im Oberteil 13 angeordnet, beispielsweise ein Saugmotor 19, mit dem ein Saugstrom 20 erzeugbar ist. Der Saugmotor 19 umfasst beispielsweise eine nicht näher erläuterte die Ventilatoranordnung zur Erzeugung des Saugstroms 20.

Das Sauggerät 10 kann in an sich bekannter Weise beispielsweise über Bedienelemente 21 bedient werden, die an einer oberhalb der Vorderwand 16 vorgesehenen Bedienwand 22 angeordnet sind. Dort befinden sich beispielsweise ein Hauptschalter 23 zum Einschalten oder Ausschalten des Saugmotors 19 oder ein Stellschalter 24 zur Einstellung einer Saugleistung des Sauggeräts 10 . Zudem ist noch eine Steckdose 25 vorgesehen, in die ein Netzkabel eines elektrischen Verbrauchers, beispielsweise einer nicht dargestellten Hand-Werkzeugmaschine, einsteckbar ist.

Das Sauggerät 10 kann über einen schematisch dargestellten internen Energiespeicher 26, beispielsweise eine Brennstoffzelle oder einen elektrischen Akkumulator, mit elektrischer Energie versorgt werden und/oder an ein elektrisches Stromversorgungsnetz N, beispielsweise 110 V bis 230 V Wechselspannung, angeschlossen werden, wofür ein Anschlusskabel 27 vorgesehen ist. Das Anschlusskabel 27 und der Saugschlauch 18 können bei Nichtgebrauch in eine Aufnahme 28 an einer Oberseite 29 des Saugergehäuses 11 eingelegt werden.

Der Saugschlauch 18 hat ein Gehäuseende 30, das als Steckende ausgestaltet ist und an oder in den Saugeinlass 17 in an sich bekannter Weise steckbar ist. Sein anderes Ende bildet einen Saugende 31 und weist eine Ansaugöffnung 32 auf, mit der beispielsweise ein starres Saugrohr, eine Bürste oder dergleichen verbindbar ist oder, was in Figur 1 dargestellt ist, beispielsweise eine Hand-Werkzeugmaschine 80. Die Hand-Werkzeugmaschine 80 ist beispielsweise eine Stichsäge, wobei alternativ auch andere Sägen, z.B. eine Kreissäge, oder Fräsen oder dergleichen möglich sind.

Die Hand-Werkzeugmaschine 80 ist zwar eine elektrische Maschine, das heißt sie hat einen elektrischen Antriebsmotor 81, wobei aber bezüglich des später noch erläutern leitungslosen Steuerungskonzeptes und/oder Meldekonzepts auch andere Antriebskonzepte einer Hand-Werkzeugmaschine mit beispielsweise einem pneumatischen Motor im Zusammenhang insbesondere mit einem Polierwerkzeug oder Schleifwerkzeug ohne weiteres möglich sind. Der Antriebsmotor 81 treibt ein Werkzeug 82, beispielsweise ein Sägeblatt, an, mit dem ein Werkstück W bearbeitbar ist. Beispielsweise wird die Hand-Werkzeugmaschine 80 dazu verwendet, einen Sägeschnitt S in das Werkstück W einzuschneiden. Dabei entsteht Staub, der vom Sauggerät 10 abgesaugt wird.

Der Antriebsmotor 81 ist in einem Maschinengehäuse 83 der Hand-Werkzeugmaschine 80 angeordnet. An einem hinteren Bereich des Maschinengehäuses 83 befindet sich eine durch ein Energiespeichermodul 90 in der Zeichnung verdeckte Halterung 84 zum Halten des Energiespeichermoduls 90, wobei die Halterung 84 auch elektrische Kontakte 85 (schematisch angedeutet) zur elektrischen Verbindung des Energiespeichermoduls 90 mit den elektrischen Komponenten im Innern des Maschinengehäuses 83 befinden. Jedenfalls versorgt das Energiespeichermodul 90 die Hand-Werkzeugmaschine 80 mit elektrischer Energie, so dass diese ohne eine Verbindung mit einem elektrischen Stromversorgungsnetz, beispielsweise dem Stromversorgungsnetz N, frei betrieben werden kann.

Die Hand-Werkzeugmaschine 80 verfügt über einen Staub-Absauganschluss 86, beispielsweise einen Anschlussstutzen, der mit dem Saugende 31 des Saugschlauchs 18 verbindbar ist. Somit kann also das Sauggerät 10 den beim Betrieb der Hand-Werkzeugmaschine 80 anfallenden Staub direkt absaugen.

Die Bedienung und Nutzung der Hand-Werkzeugmaschine 80 ist in Zusammenwirkung mit dem Sauggerät 10 in mehrfacher Hinsicht erleichtert. Zum einen kann das Sauggerät 10 mittels eines leitungslosen Bedienkonzepts ohne eine Leitungsverbindung geschaltet werden, so dass beispielsweise der Saugmotor 19 läuft oder nicht läuft, wenn die Hand-Werkzeugmaschine 80 genutzt wird oder nicht. Zum anderen ermöglicht das Sauggerät 10 ein komfortables Aufladen des Energiespeichermoduls 90.

Zunächst wird die leitungslose Bedienung erläutert:
Beispielsweise ist an dem Saugende 31 des Saugschlauchs 18 eine Extern-Kommunikationseinrichtung 50 angeordnet, mit der leitungslose Steuersignale 51 zum Steuern des Sauggeräts 10, insbesondere zum Einschalten und Ausschalten des Saugmotors 19, erzeugbar sind. Die Extern-Kommunikationseinrichtung 50 ist beispielsweise mittels eines Klett-Bandes oder sonstigen Befestigungsmitteln 52 an dem Saugschlauch 18 befestigt. Es wäre auch möglich, dass der Saugschlauch 18 eine Tasche oder sonstige Aufnahme hat, in der die Extern-Kommunikationseinrichtung 50 angeordnet ist. Es ist auch möglich, dass die Extern-Kommunikationseinrichtung 50 mit dem Material, zum Beispiel Kunststoff, des Saugschlauchs 18 umspritzt ist.

Die Extern-Kommunikationseinrichtung 50 umfasst beispielsweise einen Bewegungssensor 53, der auf Bewegungen des Saugschlauchs 18 reagiert. Wenn also der Saugschlauch 18 im Bereich seines Saugendes 31 bewegt wird, beispielsweise beim Betrieb der Hand-Werkzeugmaschine 80 vibriert, erzeugt der Bewegungssensor 53 ein Sensorsignal 54. Anhand des Sensorsignals 54 erzeugt ein Extern-Sender 55s das Steuersignal 51, vorliegend ein Funksignal, das die Extern-Kommunikationseinrichtung 50 über eine Antenne 56 versendet.

Die Extern-Kommunikationseinrichtung 50 hat zweckmäßigerweise einen lokalen Energiespeicher 57, zum Beispiel eine Batterie und/oder einen Speicherkondensator, und/oder einen Generator 58 zur Erzeugung elektrischer Energie. Der Generator 58 kann beispielsweise ein Generator sein, der mittels einer insbesondere induktiv arbeitenden Ladeeinrichtung 33, die am oder im Saugergehäuse 11 angeordnet ist, leitungslos aufgeladen werden kann, was durch einen Pfeil PL angedeutet ist. Ferner kann der Generator 58 auch beispielsweise durch Bewegungen betätigbar sein. Jedenfalls ist es bevorzugt, wenn zwischen dem Saugergehäuse 11 und der Extern-Kommunikationseinrichtung 50 keine Leitungsverbindung notwendig ist, wobei beispielsweise eine Leitungsverbindung zur elektrischen Stromversorgung im Prinzip auch möglich ist. So können beispielsweise alternativ oder in Ergänzung zur Ladeeinrichtung 33 elektrische Ladekontakte 133 zum Aufladen einer erfindungsgemäßen Extern-Kommunikationseinrichtung vorgesehen sein. Die Ladeeinrichtung 33 und die Ladekontakte 133 bilden Lademittel 233. Z.B. ist an der Oberseite 29 des Saugergehäuses 11 eine schematisch dargestellte Ladebucht oder Ladeaufnahme 355 mit den Ladekontakten 133 und/oder der Ladeeinrichtung 33 vorgesehen.

Das Sauggerät 10 weist eine elektrische Sauggerät-Kommunikationseinrichtung 40 mit einem Sauggerät-Empfänger 41r zum Empfang der durch die Extern-Kommunikationseinrichtung 50 gesendeten Steuersignalen 51 auf. Die Sauggerät-Kommunikationseinrichtung 40 umfasst beispielsweise ein Sauggerät-Kommunikationsmodul 42, das in einer Modulaufnahme 34 am Saugergehäuse 11 aufgenommen ist.

Der Sauggerät-Empfänger 41r empfängt die Steuersignale 51 z.B. über eine Antenne 46. Die Antenne 46 kann z.B. vor ein Gehäuse des Sauggerät-Kommunikationsmoduls 42 vorstehen, in dieses integriert sein oder dergleichen.

Die Modulaufnahme 34 weist beispielsweise eine Steckaufnahme 35 auf, in die ein im Zusammenhang mit einem Lademodul 60 näher beschriebener Steckvorsprung 43 eingesteckt werden kann.

An dem Steckvorsprung 43 sind beispielsweise elektrische Modul-Kontakte 44 vorgesehen, die in elektrische Verbindung mit Modul-Kontakten 36 der Modulaufnahme 34 gelangen können. Die Modul-Kontakte 44 sind z.B. an einem vorzugsweise in Gestalt eines Steckvorsprungs ausgestalteten Kontaktträger 45 vorgesehen, der zum Einstecken in eine Steckaufnahme 39 der Modulaufnahme 34 vorgesehen ist. Die Modul-Kontakte 36, 44 sind zweckmäßigerweise proprietäre Kontakte, das heißt nicht etwa Schutzkontakte wie sie der beispielsweise der am Anschlusskabel 27 angeordnete Stecker aufweist. Die Modul-Kontakte 36, 44 denen zur Übertragung elektrischer Energie und/oder zur Übermittlung von Steuersignalen und/oder Meldesignalen.

Die Modulaufnahme 34 hat beispielsweise eine im wesentlichen rechteckige Querschnittskontur und ist als eine Vertiefung ausgestaltet.

Das Sauggerät-Kommunikationsmodul 42 sendet beispielsweise über seine Modul-Kontakte 44 Schaltsignale 47 an eine Steuereinrichtung 37, die ihrerseits wiederum den Saugmotor 19 steuert, z.B. über geeignete Leistungsschalter, Halbleiter oder dergleichen. Wenn also der Sauggerät-Empfänger 41r von der Extern-Kommunikationseinrichtung 50 ein Steuersignal 51 erhält, das zum Einschalten des Saugmotors 19 dient, steuert das Sauggerät-Kommunikationsmodul 42 die Steuereinrichtung 37 entsprechend an, welche ihrerseits wiederum den Saugmotor 19 einschaltet, ausschaltet oder auch dessen Leistung einstellt, zum Beispiel dessen Drehzahl reduziert oder erhöht, was durch einen Pfeil 48 angedeutet ist.

Es versteht sich, dass derartige Stellmittel, Schalter oder dergleichen, auch direkt an Bord des Sauggerät-Kommunikationsmoduls 42 sein können, so dass die Zwischenschaltung der Steuereinrichtung 37 nicht notwendig ist.

Weiterhin kann eine Variante der Erfindung vorsehen, dass die Steuereinrichtung eines Sauggeräts integral eine leitungslose Schnittstelle, so dass ein separates Sauggerät-Kommunikationsmodul, wie beispielsweise das Sauggerät-Kommunikationsmodul 42, nicht notwendig ist. Beispielsweise könnte der Sauggerät-Empfänger 41r einen Bestandteil der Steuereinrichtung 37 bilden.

Es versteht sich, dass da obengenannte modulare Konzept vorteilhaft ist, es aber auch möglich ist, dass die Sauggerät-Kommunikationseinrichtung 40 z.B. einen festen Bestandteil des Sauggeräts 10 bildet. Die Sauggerät-Kommunikationseinrichtung 40 kann z.B. einen Bestandteil der Steuereinrichtung 37 bilden.

Anstelle oder in Ergänzung der Modul-Kontakte 36, 44 könnte auch eine leitungslose Schnittstelle (Funkschnittstelle oder optische Schnittstelle) zwischen der Sauggerät-Kommunikationseinrichtung 40 und der Steuereinrichtung 37 vorgesehen sein. Bevorzugt ist jedenfalls eine potenzialfreie Kopplung zwischen der Sauggerät-Kommunikationseinrichtung 40 und den übrigen elektrischen Komponenten des Sauggeräts 10, was man beispielsweise auch mittels Optokopplern erreichen kann.

Ein anderes Konzept sieht vor, dass beispielsweise an Bord der Hand-Werkzeugmaschine 80 eine Extern-Kommunikationseinrichtung 150 oder an Bord des Energiespeichermoduls 90 eine Extern-Kommunikationseinrichtung 250 angeordnet sind, die mit der Sauggerät-Kommunikationseinrichtung 40 leitungslos kommunizieren können.

Die Extern-Kommunikationseinrichtungen 150 und 250 können integrale Bestandteile des Energiespeichermoduls 90 bzw. der Hand-Werkzeugmaschine 80 sein. Es ist aber auch ein modulares Konzept möglich, das heißt dass beispielsweise an der Hand-Werkzeugmaschine 80 und/oder am Energiespeichermodul 90 eine Modulaufnahme vorhanden ist, in denen die entsprechend modular, beispielsweise als Steckteile ausgestalteten Extern-Kommunikationseinrichtungen 150 oder 250 angeordnet werden können. Ferner können die Extern-Kommunikationseinrichtungen 150 und/oder 250 auch mittels Befestigungsmitteln, zum Beispiel Klebemitteln, Rastverbindungsmitteln oder dergleichen, nachträglich am Energiespeichermodul 90 oder der Hand-Werkzeugmaschine 80 angeordnet werden. Somit ist eine Nachrüstung möglich.

Die Extern-Kommunikationseinrichtung 150 umfasst beispielsweise einen Drehzahlsensor 153, der eine jeweilige Drehzahl des Antriebsmotors 81 erfasst. Wenn also der Antriebsmotor 81 und somit die Hand-Werkzeugmaschine 80 betrieben wird, steuert der Drehzahlsensor 153 einen Extern-Sender 155s, der beispielsweise ein Bluetooth-Sender umfasst, zum Senden von Steuersignalen 151 über eine Antenne 156, die beispielsweise in das Maschinengehäuse 83 integriert ist, an, worauf die Sauggerät-Kommunikationseinrichtung 40 den Saugmotor 19 einschaltet oder ein Einschaltsignal an die Steuereinrichtung 37 sendet. Wenn die Drehzahl des Antriebsmotors 81 steigt, das Werkzeug 82 also noch mehr Staub bei der Bearbeitung des Werkstücks W erzeugt, kann die Extern-Kommunikationseinrichtung 150 die Sauggerät-Kommunikationseinrichtung 40 zu einer erhöhten Drehzahl des Saugmotors 19 ansteuern. Wenn die Hand-Werkzeugmaschine 80 abgeschaltet wird, steuert die Extern-Kommunikationseinrichtung 150 zum Abschalten des Saugmotors 19 an.

Anstelle oder in Ergänzung des Drehzahlsensors 153 könnte beispielsweise auch ein magnetischer Sensor, ein Hall-Sensor oder dergleichen vorgesehen sein. Selbstverständlich kann auch an Bord der Hand-Werkzeugmaschine 80 ein Stromsensor vorgesehen sein, der den Stromfluss zum Antriebsmotor 81 oder einer nicht dargestellten Arbeitsfeldbeleuchtung der Hand-Werkzeugmaschine 80, die beim Betrieb derselben leuchtet, erfasst und die Extern-Kommunikationseinrichtung 150 dementsprechend ein Steuersignal 151 zur Ansteuerung der Sauggerät-Kommunikationseinrichtung 40 erzeugt. Anstelle oder in Ergänzung des Stromsensors kann auch ein Spannungssensor vorgesehen sein, der eine am Antriebsmotor 81 oder der Arbeitsfeldbeleuchtung anliegende Versorgungsspannung misst.

Eine schematisch angedeutete Ausführungsform sieht vor, dass an einem Schalter 87, der zum Einschalten und Ausschalten des Antriebsmotors 81 der Hand-Werkzeugmaschine 80 dient, beispielsweise ein Positionssensor und/oder ein magnetischer Sensor und/oder ein elektrischer Schaltkontakt oder dergleichen anderer Sensor 153' angeordnet ist, der die Position des Schalters 87 erfasst oder in Abhängigkeit von dessen Position betätigbar ist, so dass die Extern-Kommunikationseinrichtung 150 in Abhängigkeit von einer Position des Schalters 87 die Steuersignale 51 erzeugt und somit den Saugmotor 19 mithilfe der Sauggerät-Kommunikationseinrichtung 40 einschaltet und/oder ausschaltet und/oder dessen Leistung einstellt.

In diesem Zusammenhang sei noch auf ein redundantes Erfassungskonzept hingewiesen, das heißt dass eine erfindungsgemäße Extern-Kommunikationseinrichtung selbstverständlich auch mehrere Sensoren, Schaltkontakte und dergleichen aufweisen kann, so dass sie das Steuersignal in Abhängigkeit von mindestens zwei Sensorsignalen bzw. Signalen von Schaltkontakten erzeugt. Beispielsweise wertet die Extern-Kommunikationseinrichtung 150 die Sensorsignale der Sensoren 153 und 153' aus und sendet nur dann das Steuersignal 51 zum Einschalten des Saugmotors 19, wenn beide Sensoren 153 und 153' melden, dass der Antriebsmotor 81 der Hand-Werkzeugmaschine 80 läuft.

Es ist vorteilhaft, wenn das Sauggerät 10 noch um eine feste oder vorzugsweise parametrierbare Nachlaufzeit nachläuft, d.h. der Saugmotor 19 erst nach einer gewissen Zeit, wenn die Hand-Werkzeugmaschine 80 bereits abgeschaltet ist, ebenfalls abgeschaltet wird. Somit kann noch im Saugschlauch 18 befindlicher Staub oder auch in der Umgebung um das Werkzeug 82 befindlicher Staub abgesaugt werden, auch wenn die Hand-Werkzeugmaschine 80 bereits abgeschaltet ist.

Auch ein sofortiges Einschalten des Saugmotors 19, wenn das Steuersignal 51 ein Einschalten angibt, ist nicht immer vorteilhaft. Beispielsweise kann eine Fehlbedienung vorliegen oder die Hand-Werkzeugmaschine noch nicht in Eingriff mit dem Werkstück W sein. Dementsprechend kann es vorteilhaft sein, wenn bei der Sauggerät-Kommunikationseinrichtung 40 auch eine Einschalt-Verzögerungszeit fest eingestellt oder parametrierbar ist, so dass diese den Saugmotor 19 erst nach Ablauf der Einschalt-Verzögerungszeit einschaltet, wenn sie durch das Steuersignal 51 zum Einschalten des Saugmotors 19 angesteuert worden ist.

Die Extern-Kommunikationseinrichtung 250 bildet einen Bestandteil des Energiespeichermoduls 90 und umfasst einen Stromsensor 253, der einen Stromfluss vom Energiespeichermodul 90 zu der Hand-Werkzeugmaschine 80, insbesondere deren Antriebsmotor 81, umfasst. Wenn der Stromsensor 253 einen Stromfluss feststellt, erzeugt ein Extern-Sender 255s ein entsprechendes Steuersignal 251 zur Ansteuerung der Sauggerät-Kommunikationseinrichtung 40, so dass diese den Saugmotor 19 einschaltet. Wenn die Hand-Werkzeugmaschine 80 abgeschaltet wird, sendet die Extern-Kommunikationseinrichtung 250 ein entsprechendes Abschalt-Steuersignal 251, worauf die Sauggerät-Kommunikationseinrichtung 40 den Saugmotor 19 abschaltet.

Die Extern-Kommunikationseinrichtung 250 ist in einem Energiespeichergehäuse des Energiespeichermoduls 90 angeordnet. Selbstverständlich wäre es auch möglich, sozusagen ein Zwischenmodul 100 vorzusehen, das zwischen Anschlusskontakte 92 des Energiespeichermoduls 90 und die Kontakte 85 der Hand-Werkzeugmaschine 80 geschaltet ist, um den Stromfluss vom Energiespeichermodul 90 zur Hand-Werkzeugmaschine 80 bzw. der Antriebsmotor 81 zu erfassen und ein entsprechendes Steuersignal 251 zu erzeugen. Das Zwischenmodul 100 ist angedeutet.

Eine bevorzugte Ausführungsform sieht vor, dass eine Sauggerät-Kommunikationseinrichtung und eine Extern-Kommunikationseinrichtung, die leitungslos miteinander kommunizieren, im Rahmen eines Lernprozesses, z.B. einer so genannten Teach-Funktion, quasi kennen lernen. Somit kann zum Beispiel einem Missbrauch oder eine Fehlbedienung vorgebeugt werden. Beispielsweise sendet die Extern-Kommunikationseinrichtung 50 im Rahmen einer Startprozedur zunächst eine Kommunikationskennung 59 an den Sauggerät-Empfänger 41r, der seinerseits wiederum anhand zum Beispiel einer Vergleichsliste überprüft, ob die Kommunikationskennung 59 die Extern-Kommunikationseinrichtung 50 zum Senden der Steuersignale 51 berechtigt. Wenn also beispielsweise mehrere Handwerker auf einer Baustelle arbeiten und mit ihren Hand-Werkzeugen gemäß der Erfindung Sauggeräte leitungslos einschalten und ausschalten, kann somit verhindert werden, dass es zu Störungen kommt.

Es ist auch möglich, dass die Sauggerät-Kommunikationseinrichtung 40 beispielsweise durch Drücken eines in der Zeichnung nicht dargestellten elektrischen Kontaktes der Sauggerät-Kommunikationseinrichtung 40 zum Empfang der Kommunikationskennung 59 bereit ist, somit also die Extern-Kommunikationseinrichtung 50, 150, 250 als eine berechtigte Extern-Kommunikationseinrichtung erkennt und anschließend von ihr dann die Steuersignale 51, 151, 251 akzeptiert.

Auch das Lademodul 60 kann eine erfindungsgemäße Sauggerät-Kommunikationseinrichtung aufweisen oder bilden, beispielsweise eine Sauggerät-Kommunikationseinrichtung 140.

Bislang wurde die Kommunikationsrichtung von der Extern-Kommunikationseinrichtung 50, 150, 250 zur Sauggerät-Kommunikationseinrichtungen 40, 140 im Sinne einer Steuerung beschrieben des Sauggeräts 10 durch die Extern-Kommunikationseinrichtung 50, 150, 250.

In der Kommunikationsrichtung von der Hand-Werkzeugmaschine zum Sauggerät können selbstverständlich auch Meldungen erfolgen, so dass beispielsweise ein Betriebszustand der Hand-Werkzeugmaschine 80 an Bord des Sauggeräts 10 angezeigt werden können. Beispielsweise kann die Extern-Kommunikationseinrichtung 150 eine Funktionsstörung der Hand-Werkzeugmaschine 80 im Rahmen mittels eines Extern-Senders 155s als ein Meldesignal 101 an die Sauggerät-Kommunikationseinrichtung 40 senden, welche ihrerseits dann das Meldesignal 101 über einen Sauggerät-Empfänger 41r empfängt und beispielsweise eine optische Anzeige 102, zum Beispiel eine LED, zur Anzeige des Meldesignals 101 ansteuert.

Auch zwischen der Extern-Kommunikationseinrichtung 250, die beispielsweise an Bord des Energiespeichermoduls 90 ist, und dem Lademodul 60, das die Sauggerät-Kommunikationseinrichtung 140 umfasst, ist eine leitungslose Kommunikation zweckmäßig. So kann beispielsweise die Extern-Kommunikationseinrichtung 250 mittels eines Extern-Senders 255s an das Lademodul 60, also die Ladeeinrichtung 61, mittels eines Meldesignals 201 den Ladezustand des Energiespeichermoduls 90 melden. Die Sauggerät-Kommunikationseinrichtung 140 empfängt das Meldesignal über einen Sauggerät-Empfänger 141r. Beispielsweise kann eine optische und/oder akustische Anzeige 103 an Bord der Ladeeinrichtung 61 vorgesehen sein, die den Ladezustand des externen, an der Hand-Werkzeugmaschine 80 betriebenen Energiespeichermoduls 90 anzeigt.

Ferner ist es möglich, dass beispielsweise die Ladeeinrichtung 61 die Aufladung des aktuell aufzuladenden Energiespeichermoduls 90 in Abhängigkeit von dem Meldesignal 201 steuert, beispielsweise die elektrische Aufladung dieses aufzuladenden Energiespeichermoduls 90 beschleunigt, wenn das an der Hand-Werkzeugmaschine 80 betriebene Energiespeichermodul 90 schnell einen Ladung verliert, also bald ausgetauscht werden muss. Die Extern-Kommunikationseinrichtung 250 umfasst beispielsweise eine Messeinrichtung 257 zur Erfassung des Ladezustand des Energiespeichermoduls 90 und zur Erzeugung des den Ladezustand meldenden Meldesignals 201.

Selbstverständlich ist das vorgenannte leitungslose Konzept auch in umgekehrter Richtung anwendbar, das heißt dass die Sauggerät-Kommunikationseinrichtungen 40, 140 Nachrichten oder Signale an die Extern-Kommunikationseinrichtungen 50, 150, 250 senden.

An Bord der Sauggerät-Kommunikationseinrichtungen 40 und/oder der Sauggerät-Kommunikationseinrichtungen 140 sind beispielsweise Sauggerät-Sender 41s und 141s vorgesehen, die zum Senden von Steuersignalen und/oder Meldesignalen an die Extern-Kommunikationseinrichtungen 50, 150, 250 ausgestaltet sind.

Wenn beispielsweise die Steuereinrichtung 37 des Sauggeräts 10 der Sauggerät-Kommunikationseinrichtung 40 mittels eines internen Signals 147 signalisiert, dass der Staubsammelraum 15 nahezu gefüllt ist, also keine weiteren Partikel mehr aufnehmen kann, kann der Sauggerät-Sender 41s ein Meldesignal 105 an die Extern-Kommunikationseinrichtung 50 senden, welche an optischen oder akustischen Ausgabemitteln 106, die z.B. eine LED umfassen, den Inhalt des Meldesignals 105 ausgibt. Der Bediener kann anhand dieser direkt vor Ort, bei der Hand-Werkzeugmaschine 80 erfolgenden Signalausgabe erkennen, dass er beispielsweise den Sammelbehälter des Sauggeräts 10 entleeren muss.

Die Steuereinrichtung 37 kann also ein Meldesignal 105 oder eine Nachricht mithilfe der Sauggerät-Kommunikationseinrichtung 40 generieren, das diese über den Sauggerät-Sender 41s an eine oder mehrere der Extern-Kommunikationseinrichtungen 50, 150 oder 250 sendet. Das Meldesignal 105, das wie angedeutet auch eine komplexere, mehrere Informationen enthaltende Nachricht sein kann oder auch mehrere voneinander separate Nachrichten umfassen kann, enthält beispielsweise eine Information über die Größe des Saugstroms 20 und/oder eine Saugleistung des Saugmotors 19 und/oder eine Information über einen Füllstand des Staubsammelraums 15.

Die Extern-Kommunikationseinrichtungen 50, 150 oder 250 können eine oder mehrere Informationen des Meldesignals 105 beispielsweise an Ausgabemitteln 106 ausgeben, die beispielsweise eine Leuchtanzeige, zum Beispiel LEDs, und/oder ein Display und/oder einen Lautsprecher oder andere akustische Ausgabemittel umfassen. Wenn also beispielsweise das Meldesignal 105 signalisiert, dass demnächst der Staubsammelraum 15 und/oder ein darin angeordneter, in der Zeichnung nicht dargestellter Filter, vollständig gefüllt und verschmutzt ist, kann beispielsweise eine als Warn-LED ausgestaltete Leuchtanzeige 107 der Extern-Kommunikationseinrichtung 50 dieses anzeigen.

Die an Bord des Energiespeichermoduls 90 oder des Zwischenmodul 100 oder der Hand-Werkzeugmaschine 80 angeordnete Extern-Kommunikationseinrichtung 150 oder 250 kann darüber hinaus beispielsweise auch eine haptische Anzeige, eine Vibrationsanzeige oder dergleichen umfassen, um das Meldesignal 105 auszugeben. Beispielsweise kann als ein Ausgabemittel an Bord der Hand-Werkzeugmaschine 80 eine optische und/oder akustische Anzeige 104 und/oder ein Vibrationselement 109 vorgesehen sein, das bei einem kritischen Füllstand im Staubsammelraum 15 und/oder bei einer geringeren Saugleistung des Sauggeräts 10, die im Rahmen des Meldesignals 105 signalisiert wird, vibriert und so dem Bediener anzeigt, dass er sich um das Sauggerät 10 kümmern sollte, damit die von ihm gewünschte Saugleistung zur Verfügung steht.

Eine noch weiter gehende Funktion stellt es dar, wenn das Sauggerät 10 und/oder die Sauggerät-Kommunikationseinrichtungen 40 oder 140 mithilfe eines Steuersignals 108 direkt Einfluss auf die Funktion der Hand-Werkzeugmaschine 80 nimmt. Beispielsweise kann die Steuereinrichtung 37 bei einem Ausfall des Sauggeräts 10 oder einer entsprechend kritischen, geringeren Saugleistung des Sauggeräts 10, eine Information 147 an die Sauggerät-Kommunikationseinrichtungen 40 oder 140 senden, die daraus entsprechende das Steuersignal 108 erzeugt und an die Extern-Kommunikationseinrichtungen 50, 150, 250 sendet. Die Extern-Kommunikationseinrichtungen 150 oder 250 können dann direkt Einfluss auf den Betrieb der Hand-Werkzeugmaschine 80 nehmen. Wenn beispielsweise die Saugleistung des Sauggeräts 10 nicht oder nur in einem verringerten Umfang zur Verfügung steht, kann das Steuersignal 108 dazu instruieren, die Leistung des Antriebsmotors 81 zu reduzieren oder diesen sogar ganz ab zu schalten. Dadurch kann beispielsweise vermieden werden, das der Nutzer durch umher wirbelnde Partikel gesundheitlichen Schaden nimmt, wenn das Sauggerät 10 die von der Hand-Werkzeugmaschine 80 erzeugten Partikeln nicht mehr ausreichend absaugen kann. Die an Bord des Energiespeichermoduls 90 befindliche Extern-Kommunikationseinrichtung 250 kann beispielsweise den Stromfluss zur Hand-Werkzeugmaschine 80 mittels einer Schalteinrichtung 258 ab- und anschalten, z.B. nach Ansteuerung durch das Steuersignal 108.

Ferner kann die Extern-Kommunikationseinrichtung 250 z.B. eine drahtgebundene oder vorzugsweise drahtlose Schnittstelle 259, z.B. eine Funkschnittstelle, zur Kommunikation mit der Hand-Werkzeugmaschine 80, insbesondere deren Steuerung 88, aufweisen, z.B. um das Steuersignal 108 weiterzuleiten und/oder die Betriebsparameter 450, 400 und/oder die Identifikationskennungen 410, 460 zu kommunizieren. Eine drahtgebundene Schnittstelle 259 kann z.B. vorsehen, dass Daten über die Versorgungsleitungen zur Hand-Werkzeugmaschine 80 digital übertragen und/oder aufmoduliert werden.

Die Extern-Kommunikationseinrichtung 150 ist direkt an die Steuerung, zum Beispiel eine Bordelektronik, der Hand-Werkzeugmaschine 80 angeschlossen oder bildet einen Teil derselben, so dass diese auf diesem Wege direkt Einfluss auf den Betrieb des Antriebsmotors 81 nehmen kann, diesen also beispielsweise abschalten kann. Selbstverständlich ist es vorteilhaft, wenn zuvor noch eine Warnung erfolgt, so dass der Bediener nicht durch die vorgenannte Zwangsabschaltung überrascht wird.

Es ist vorteilhaft, wenn die Sauggerät-Kommunikationseinrichtungen 40, 140 und/oder die Extern-Kommunikationseinrichtungen 50, 150, 250 beispielsweise einen Mikroprozessor aufweisen und/oder zur Ausführung von Softwaremodulen geeignet sind, mit denen die oben erläuterten oder nachfolgend erläuterten Funktionen realisierbar sind. Beispielsweise hat die Extern-Kommunikationseinrichtung 50 einen Mikroprozessor 70, der mittels eines Programmmoduls 71 die Sensorsignale 54 auswertet und beispielsweise den Extern-Sender 55s und/oder den Extern-Empfänger 55r ansteuert oder realisiert. Das Programmmodul 71 ist ebenso wie die Kommunikationskennung 59 zweckmäßigerweise in einem Speicher 72 gespeichert.

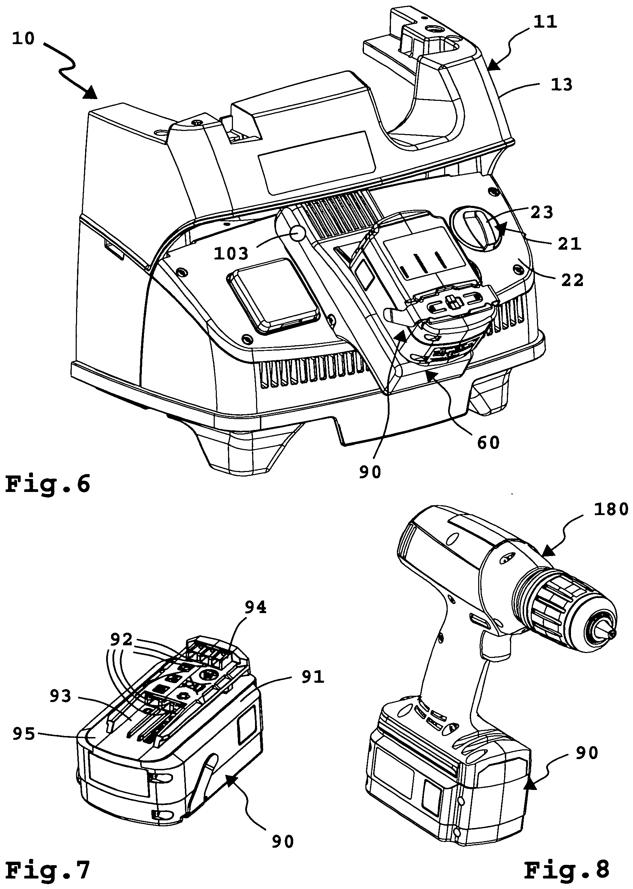

In einer Funktion ist das Lademodul 60 zum Aufladen des Energiespeichermoduls 90 oder anderen, in der Zeichnung nicht dargestellten Energiespeichermodulen für Hand-Werkzeugmaschinen, beispielsweise der Hand-Werkzeugmaschine 80 oder einer in Figur 8 dargestellten Hand-Werkzeugmaschine 180 in Gestalt eines Akku-Schraubers oder Bohrers, vorgesehen. Das Lademodul 60 bildet eine Ladeeinrichtung 61 zum Aufladen des elektrischen Energiespeichermoduls 90.

Das Lademodul 60 hat an seinem Ladergehäuse 62 eine Halterung 63 zum Halten des Energiespeichermoduls 90. Die Halterung 63 umfasst beispielsweise einen Steckvorsprung 64, der in eine Steckaufnahme 93 des Energiespeichergehäuses 91 bzw. des Energiespeichermoduls 90 einsteckbar ist.

Die Halterung 63 umfasst auch eine Steckaufnahme oder Halteaufnahme 68, in die ein Steckvorsprung 94 an einer Oberseite 95 des Energiespeichergehäuses 91 eingreifen kann. Die Halterung 63 entspricht der Halterung 84 der Hand-Werkzeugmaschine 80 oder 180, d.h. sie ist zur formschlüssigen Aufnahme des Energiespeichergehäuses 91 ausgestaltet.

Im Bereich des Steckvorsprungs 64 sind elektrische Ladekontakte 65 zur Bereitstellung einer Ladespannung L für das elektrische Energiespeichermodul 90 vorgesehen.

Die Ladespannung L ist beispielsweise eine Gleichspannung in einem Bereich von 5 V bis 25 V. In diesem Zusammenhang ist es vorteilhaft, wenn das Lademodul 60 Erkennungsmittel 66 aufweist, um den jeweiligen Typ des Energiespeichermoduls 90 zu erkennen und dementsprechend die Ladespannung L einzustellen. Wenn also beispielsweise ein 12 V-Energiespeichermodul angeschlossen wird, wird die Ladespannung L entsprechend niedriger eingestellt, während bei einem Energiespeichermodul mit einer Nennspannung von 18 V eine entsprechend höhere Ladespannung L eingesteckt wird. Die Erkennungsmittel 66 umfassen beispielsweise elektrische Mittel, optische Mittel oder dergleichen. Es ist auch möglich, dass die Erkennungsmittel 66 beispielsweise eine Bus-Schnittstelle umfassen, um mit einem Buskoppler an Bord des Energiespeichermoduls 90 zu kommunizieren und so Daten des Energiespeichermoduls 90, beispielsweise dessen Ladezustand, Nennspannung oder dergleichen, zu erfassen.

Mithilfe von elektrischen Anpassungsmitteln 67, die beispielsweise einen elektrischen Transformator und/oder einen Gleichrichter oder dergleichen umfassen, kann die Ladeeinrichtung 61 eine beispielsweise vom Versorgungsnetz N bereitgestellte Versorgungsspannung V zu der Ladespannung L umwandeln.

Ferner sind vorteilhaft Überwachungsmittel 75 zur Überwachung der Ladespannung L und/oder zur Überwachung eines Ladezustand des Energiespeichermoduls 90 vorgesehen, so dass dieses optimal aufgeladen wird.

Die Überwachungsmittel 75 und/oder Erkennungsmittel 66 und/oder die Anpassungsmittel 67 umfassen beispielsweise einen Mikroprozessor 76, der Programmcode von Softwaremodulen ausführt, beispielsweise eines in einem Speicher 77 gespeicherten Softwaremoduls 78. Eine Realisierung der Überwachungsmittel 75 und/oder der Erkennungsmittel 66 und/oder der Anpassungsmittel 67 in Hardware ist ohne weiteres möglich.

Das Ladergehäuse 62 ist teilweise ähnlich ausgestaltet wie das Sauggerät-Kommunikationsmodul 42, hat also auch einen Steckvorsprung 43, an dem Modul-Kontakte 44 zur Herstellung einer elektrischen Verbindung mit den Modul-Kontakten 36 der Modulaufnahme 34 vorgesehen sind. Somit können die im Innern des Ladergehäuses 62 angeordneten Anpassungsmittel 67 vom Sauggerät 10, d.h. beispielsweise über das Anschlusskabel 27, mit elektrischer Energie versorgt werden, um die Ladespannung L bereitzustellen.

Eine zusätzliche Fixierung des Lademoduls 60 am Saugergehäuse 11 bzw. der Modulaufnahme 34 kann beispielsweise durch Schrauben 69 erfolgen, die in korrespondierende Schrauböffnungen 38 der Modulaufnahme 34 einschraubbar sind. Auch ein magnetischer Halt, ein Verrasten oder dergleichen des Lademoduls 60 am Saugergehäuse 11 ist ohne weiteres möglich, jedoch in der Zeichnung nicht dargestellt. Das Sauggerät-Kommunikationsmodul 42 kann zweckmäßigerweise auch entsprechende Haltemittel (Schrauben, Magnete, Rastmittel) aufweisen, um in der Modulaufnahme 34 einen sicheren Halt zu finden.

Weiterhin ist es zweckmäßig, in der Zeichnung jedoch nicht dargestellt, dass das Lademodul 60 beziehungsweise die Ladeeinrichtung 61 einen integralen Bestandteil des Sauggeräts 10 bildet, das heißt dass beispielsweise das Ladergehäuse 62 und das Saugergehäuse 11 einstückig sind.

Selbstverständlich können auch an einer anderen Stelle des Saugergehäuses 11 eine Halterung in der Art der Halterung 63 und Ladekontakte in der Art der Ladekontakte 65 angeordnet sein, beispielsweise oben im Bereich der Aufnahme 28, wo das zu ladende Energiespeichermodul geschützt untergebracht werden kann, also weniger exponiert ist als im Bereich der Bedienwand 22.

Die durch das Lademodul 60 gebildete Sauggerät-Kommunikationseinrichtung 140 weist beispielsweise einen Sauggerät-Empfänger 141r auf. Über die Modul-Kontakte 36 wird das Lademodul 60 mit elektrischer Energie, beispielsweise einer Versorgungsspannung V, versorgt. Ein Stromsensor 49 an Bord des Sauggeräts 10, zum Beispiel als Bestandteil oder in Verbindung mit der Steuereinrichtung 37, erfasst beispielsweise, ob über die Modul-Kontakte 36 ein elektrischer Strom fließt.

Wenn das Lademodul 60 über seinen Sauggerät-Empfänger 141r und eine beispielsweise in das Ladergehäuse 62 integrierte Antenne 146 ein Steuersignal 51, 151, 251 zum Einschalten des Saugmotors 19 erhält, beginnt es mit dem Ladevorgang des Energiespeichermoduls 90, erzeugt also aus der Versorgungsspannung V die Ladespannung L, so dass ein Ladestrom I fließt. Ein zur Bereitstellung des Ladestroms I notwendiger Eingangsstrom E wird von dem Stromsensor 49 erfasst. Das Sauggerät 10 erkennt also, dass ein elektrischer Verbraucher Strom benötigt und schaltet in an sich bekannter Weise den Saugmotor 19 daraufhin ein.

Wenn Steuersignal 51, 151, 251 dazu instruiert, den Saugmotor 19 abzuschalten oder dessen Leistung zu verringern, reduziert die Sauggerät-Kommunikationseinrichtung 140 bzw. das Lademodul 60 die Stromzufuhr in das Energiespeichermodul 90 oder schaltet den Ladevorgang ab, so dass eingangsseitig (Versorgungsspannung V) kein durch den Stromsensor 49 erfassbarer Eingangsstrom E oder ein unterhalb einer Erfassungsschwelle liegender Eingangsstrom E fließt und somit beispielsweise die Steuereinrichtung 37 den Saugmotor 19 abschaltet. Somit kann also beispielsweise das Lademodul 60 quasi eine netzgebundene elektrische Hand-Werkzeugmaschine simulieren, die über das Sauggerät 10 mit elektrischer Energie versorgt wird - was tatsächlich jedoch nicht der Fall ist.

Es ist auch möglich, dass die Ladeeinrichtung 61 von dem Energiespeicher 26 an Bord des Sauggeräts 10 mit elektrischer Energie versorgt wird. Beispielsweise steuert die Steuereinrichtung 37 die Bereitstellung elektrischer Energie an den Modul-Kontakten 36. Bevorzugt ist dabei vorgesehen, dass die Steuereinrichtung 37 beispielsweise die Leistungsabgabe an den Modul-Kontakten 36 absenkt, wenn der Saugmotor 19 läuft, anschließend wieder anhebt. Somit wird beispielsweise ein Netzteil des Sauggeräts 10, das die Ladespannung L bereitstellt, weniger stark belastet.

Die an Bord des Sauggeräts 10 befindlichen oder mit diesem verbundenen Sauggerät-Kommunikationseinrichtungen 40 und/oder 140 und die Extern-Kommunikationseinrichtungen 50, 150, 250 eignen sich auch für eine Anmeldeprozedur, bei der das Sauggerät 10 mindestens einen Betriebsparameter 400 und/oder mindestens eine Identifikationskennung 410 an das externe Gerät, beispielsweise die Hand-Werkzeugmaschine 80 und/oder deren Energiespeichermodul 90 sendet und/oder in umgekehrter Richtung das an das Sauggerät 10 anzuschließende Gerät, beispielsweise die Hand-Werkzeugmaschine 80 oder deren Energiespeichermodul 90 mindestens einen Betriebsparameter 450 und/oder mindestens eine Identifikationskennung 460 an das Sauggerät 10 sendet, so dass nur zueinander passende Paare von Sauggerät und Hand-Werkzeugmaschine verwendet werden und/oder die Betriebsparameter des Sauggeräts 10 und der Hand-Werkzeugmaschine 80 oder 180 so eingestellt werden, dass ein optimaler Betrieb der jeweiligen Hand-Werkzeugmaschine 80 oder 180 an dem Sauggerät 10 möglich ist.

Wenn beispielsweise die Saugleistung des Sauggeräts 10 für den Betrieb der Hand-Werkzeugmaschine nicht ausreicht, kann anhand der nachfolgend im Detail beschriebenen Prozedur verhindert werden, das das Sauggerät 10 im Zusammenhang mit der Hand-Werkzeugmaschine 80 verwendet wird. Wenn die Saugleistung jedoch für beispielsweise die Hand-Werkzeugmaschine 180 ausreicht, können das Sauggerät 10 und die Hand-Werkzeugmaschine 180 miteinander verwendet werden.

Weiterhin ist es vorteilhaft möglich, dass das Sauggerät 10 und die jeweils angeschlossene Hand-Werkzeugmaschine 80 oder 180 ihre jeweiligen Leistungen aufeinander abstimmen, indem sich das eine Gerät beim anderen Gerät und/oder umgekehrt anmeldet.

An dieser Stelle sei bemerkt, dass zwar eine leitungslose Kommunikation zwischen der Hand-Werkzeugmaschine 80 und 180 einerseits und dem Sauggerät 10, insbesondere deren Sauggerät-Kommunikationseinrichtungen 40, 140 zweckmäßig ist, jedoch nicht ausschließt, dass insbesondere für die nachfolgend beschriebene Anmeldeprozedur oder Identifikationsprozedur, aber auch das Senden von Meldesignalen und/oder Steuersignalen, eine leitungsgebundene Kommunikation, zumindest in einer Richtung (vom Sauggerät zur Hand-Werkzeugmaschine oder umgekehrt) im Rahmen der Erfindung liegt. Mit anderen Worten kann beispielsweise in eine Richtung, das heißt beispielsweise vom Sauggerät zur Hand-Werkzeugmaschine leitungsgebunden, in umgekehrter Richtung leitungslos kommuniziert werden oder auch umgekehrt.

Beispielsweise verläuft in dem Saugschlauch 18 zu diesem Zweck mindestens eine Kommunikationsleitung 300, zum Beispiel eine elektrische Leitung und/oder ein optischer Leiter, an die einerseits beispielsweise die Sauggerät-Kommunikationseinrichtungen 40 und/oder die Steuereinrichtung 37 oder auch eine sonstige Komponente an Bord des Sauggeräts 10 angeschlossen ist, um mit der Hand-Werkzeugmaschine 80 oder 180 zu kommunizieren. Auf Seiten der Hand-Werkzeugmaschine 80 oder 180 kann beispielsweise die Extern-Kommunikationseinrichtung 150 oder 250 mit der mindestens einen Kommunikationsleitung 300 verbunden sein.

Beispielsweise sendet die Extern-Kommunikationseinrichtung 150 oder 250 die die Hand-Werkzeugmaschine 80 identifizierende Identifikationskennung 460 an das Sauggerät 10.

Die Sauggerät-Kommunikationseinrichtung 40 empfängt die Identifikationskennung 460 und leitet diese beispielsweise an die Steuereinrichtung 37 weiter, welche anhand der Identifikationskennung 460 beispielsweise den Typ der Hand-Werkzeugmaschine 80 erkennt, beispielsweise welche Partikelmenge von dieser Hand-Werkzeugmaschine 80 zu erwarten ist, welche Saugleistung dementsprechend vom Sauggerät 10 zu erbringen ist oder dergleichen.

Die Steuereinrichtung 37 stellt dementsprechend die Funktion des Sauggerätes 10 ein, beispielsweise derart, dass an dem Stellschalter 24 zwar die Saugleistung des Saugmotors 19 einstellbar ist, jedoch nicht unterhalb eines Grenzwertes, der eine zuverlässige Absaugung der Partikel ermöglicht, die die Hand-Werkzeugmaschine 80 erzeugt.

Es ist auch möglich, dass die Steuereinrichtung 37 überprüft, ob ein Betrieb der Hand-Werkzeugmaschine 80 mit dem Sauggerät 10 überhaupt möglich ist, so mindestens ein Kriterium erfüllt ist. Wenn beispielsweise zu beachten ist, dass das Sauggerät 10 im Zusammenhang mit der jeweiligen Hand-Werkzeugmaschine einen Explosionsschutz bereitstellen soll und/oder mindestens eine vorbestimmte Absaugleistung des Sauggeräts 10 erforderlich ist, damit das mindestens eine Kriterium erfüllt ist, kann die Steuereinrichtung 37 ermitteln, ob die Identifikationskennung 460 in einer Tabelle 430 angegeben ist, die mehrere Identifikationskennungen enthält. Wenn dies der Fall ist, gibt die Steuereinrichtung 37 das Sauggerät 10 für einen Betrieb mit der Hand-Werkzeugmaschine 80 frei.

Je nach an der Hand-Werkzeugmaschine 80 verwendetem Werkzeug 82 kann auch die Art der Partikel unterschiedlich sein, beispielsweise größere Späne oder kleinere Späne umfassen. Dementsprechend ist es zweckmäßig, wenn die Hand-Werkzeugmaschine 80 beispielsweise als einen Betriebsparameter 450 eine Information über das verwendete Werkzeug 82 an die Sauggerät-Kommunikationseinrichtungen 40 oder 140 sendet. In Abhängigkeit von der Beschaffenheit der Partikel, die der Betriebsparameter 450 dann repräsentiert, kann beispielsweise die Steuereinrichtung 37 Abreinigungsintervalle einer Abreinigungseinrichtung 9, die einen Filter 8, der den Saugmotor 19 vorgelagert ist, abreinigt, einstellen.

Auch auf Seiten der Hand-Werkzeugmaschine 80 ist es vorteilhaft, wenn sich das Sauggerät 10 sozusagen vor dem Beginn eines Betriebes anmeldet. So sendet beispielsweise die Sauggerät-Kommunikationseinrichtung 40 eine Identifikationskennung 410 des Sauggeräts 10 und/oder mindestens einen Betriebsparameter 400 an die Hand-Werkzeugmaschine 80.

Eine Steuerung 88 an Bord der Hand-Werkzeugmaschine 80 überprüft beispielsweise anhand einer Prüftabelle, ob die Identifikationskennung 410 das Sauggerät 10 derart klassifiziert, dass es im Zusammenhang mit der Hand-Werkzeugmaschine 80 verwendet werden kann. Nur dann gibt die Steuerung 88 den Antriebsmotor 81 frei. Ansonsten blockiert die Steuerung 88 den Antriebsmotor 81, so dass beispielsweise gesundheitliche Beeinträchtigungen eines Nutzers der Hand-Werkzeugmaschine 80 durch nicht abgesaugte Partikel vermieden werden können.

Anhand des Betriebsparameters 400 kann das Sauggerät 10 der Hand-Werkzeugmaschine 80 beispielsweise mitteilen, welche Saugleistung zur Verfügung stehen kann. Die Hand-Werkzeugmaschine 80 reduziert dann beispielsweise eine Maximaldrehzahl des Antriebsmotors 81, so dass selbst bei einer höchsten am Schalter 87 einstellbaren Drehzahl des Antriebsmotors 81 die Absaugleistung des Sauggeräts 10 ausreicht, um zuverlässig alle anfallenden Partikel oder zumindest im Wesentlichen alle Partikel vom Arbeitsbereich der Hand-Werkzeugmaschine 80 abzusaugen.

Weiterhin können die Extern-Kommunikationseinrichtungen 150 oder 250 und/oder die Sauggerät-Kommunikationseinrichtungen 40 oder 140 anhand der jeweils empfangenen Identifikationskennung wenn der 410, 460 und/oder der empfangenen Betriebsparameter 400, 450 unmittelbar Steuersignale und/oder Meldesignale erzeugen und an die jeweils andere Kommunikationseinrichtungen versenden.

Wenn beispielsweise die Identifikationskennung 410 das Sauggerät 10 einer bestimmten Leistungsklasse zuordnet, kann die Extern-Kommunikationseinrichtungen 150 und/oder 250 anhand der Identifikationskennung 410 beispielsweise ermitteln, dass das Sauggerät 10 eine bestimmte Leistung erbringen muss und sendet dementsprechend ein Steuersignal 351, das das Sauggerät 10 dazu instruiert, eine bestimmte Leistungsstufe als eine minimal am Stellschalter 24 einstellbare Leistungsstufe einzustellen. Selbstverständlich kann anstelle des Steuersignals 351 auch ein Meldesignal 352 generiert werden, das beispielsweise von der Anzeige 102 angezeigt wird.

Das Sauggerät 10 bzw. die Sauggerät-Kommunikationseinrichtungen 40, 140 können auch in dieser Weise ausgestaltet sein. Beispielsweise ermitteln die Sauggerät-Kommunikationseinrichtungen 40, 140 und/oder das Sauggerät 10, beispielsweise die Steuereinrichtung 37, anhand der Identifikationskennung 460 oder des Betriebsparameters 450, welche Drehzahlen des Antriebsmotors 81 der Hand-Werkzeugmaschine 80 einzustellen oder einstellbar sind und sendet dementsprechend ein Steuersignal 353 und/oder ein Meldesignal 354 an die Extern-Kommunikationseinrichtungen 150 oder 250. Das Steuersignal 353 instruiert diese dazu, beispielsweise der Steuereinrichtung 88 mitzuteilen, welche Leistungen des Antriebsmotors 81 am Schalter 87 einstellbar sein sollen. Die Informationen des Meldesignals 354 werden beispielsweise an der Anzeige 104 angezeigt, so dass der Bediener weiß, welche Leistungsbereiche an der Hand-Werkzeugmaschine 80 vorzugsweise einzustellen sind und/oder welche Werkzeuge verwendbar sind oder dergleichen.

## Patentansprüche

1. Verfahren zum Betreiben einer Hand-Werkzeugmaschine (80) mit einem Sauggerät (10), das einen Saugmotor (19) zum Erzeugen des Saugstroms (20) und ein Saugergehäuse (11), in dem der Saugmotor (19) und ein Staubsammelraum (15) zum Sammeln der aus dem Saugstrom (20) abgesonderten Partikel angeordnet ist, aufweist, wobei das Sauggerät (10) zum Absaugen von beim Betrieb einer einen Antriebsmotor (81) zum Antreiben eines Werkzeugs (82) aufweisenden Hand-Werkzeugmaschine (80), vorgesehen ist, **dadurch gekennzeichnet, dass** eine Sauggerät-Kommunikationseinrichtung (40; 140) des Sauggeräts (10) mit einer in einem Abstand zu dem Saugergehäuse (11) im Zusammenhang mit der Hand-Werkzeugmaschine (80) zu betreibenden oder einen Bestandteil der Hand-Werkzeugmaschine (80) bildenden Extern-Kommunikationseinrichtung (50; 150; 250) leitungslos und/oder leitungsgebunden kommuniziert, wobei die Sauggerät-Kommunikationseinrichtung (40; 140) mindestens eine Identifikationskennung (410, 460) und/oder einen Betriebsparameter (400, 450) an die Extern-Kommunikationseinrichtung (50; 150; 250) sendet und/oder mindestens eine Identifikationskennung (410, 460) und/oder einen Betriebsparameter (400, 450) von der Extern-Kommunikationseinrichtung (50; 150; 250) empfängt, und dass das Sauggerät (10) und/oder die Hand-Werkzeugmaschine (80) mindestens eine Funktion anhand der jeweils empfangenen mindestens einen Identifikationskennung (410, 460) und/oder des jeweils empfangenen Betriebsparameters (400, 450) ausführen.

2. Verfahren nach Anspruch 1, **dadurch gekennzeichnet, dass** das Sauggerät (10) und/oder die Hand-Werkzeugmaschine (80) anhand des empfangenen Betriebsparameters (400, 450) und/oder der Identifikationskennung (410, 460), ermittelt, ob oder unter welchen Bedingungen ein mindestens einem Kriterium, insbesondere einem Sicherheitskriterium oder Umweltkriterium, entsprechender Betrieb der Paarung bestehend aus dem Sauggerät (10) und der Hand-Werkzeugmaschine (80) möglich ist.

3. Verfahren nach Anspruch 2, **dadurch gekennzeichnet, dass** das Sauggerät (10) und/oder die Hand-Werkzeugmaschine (80) über ein Ausgabemittel, insbesondere eine Anzeige und/oder ein akustisches Ausgabemittel, das an dem Sauggerät (10) oder der Hand-Werkzeugmaschine (80) angeordnet ist, ausgeben, ob und unter welchen Bedingungen der dem mindestens einen Kriterium entsprechende Betrieb der Paarung möglich ist.

4. Verfahren nach Anspruch 2 oder 3, **dadurch gekennzeichnet, dass** das Sauggerät (10) und/oder die Hand-Werkzeugmaschine (80) einen Betrieb mit dem jeweils anderen Gerät, der Hand-Werkzeugmaschine (80) oder dem Sauggerät (10), blockiert, wenn das mindestens eine Kriterium nicht erfüllbar ist, und/oder mindestens einen Arbeitsparameter für eine Funktion des Sauggeräts (10) oder der Hand-Werkzeugmaschine (80), insbesondere einen unteren oder einen oberen Grenzwert, entsprechend dem mindestens einen Kriterium einstellt.

5. Verfahren nach einem der vorhergehenden Ansprüche, **dadurch gekennzeichnet, dass** die Identifikationskennung (410, 460) eine die Hand-Werkzeugmaschine (80) oder das Sauggerät (10) eindeutig kennzeichnende Identifikationskennung (410, 460) ist, so dass aus der Identifikationskennung (410, 460) Betriebsdaten der Hand-Werkzeugmaschine (80) oder des Sauggeräts (10), insbesondere Leistungsdaten und/oder Leistungsanforderungen, ermittelbar sind.

6. Verfahren nach einem der vorhergehenden Ansprüche, **dadurch gekennzeichnet, dass** der mindestens eine Betriebsparameter (400, 450) ein Werkzeugmaschinen-Betriebsparameter (400, 450) der Hand-Werkzeugmaschine (80), der einen bei einem Betrieb der Hand-Werkzeugmaschine (80) möglichen oder aktuellen Betriebszustand, insbesondere eine beim Betrieb der Hand-Werkzeugmaschine (80) anfallende maximale Partikelmenge und/oder eine typische Beschaffenheit der Partikel, repräsentiert, und/oder die Identifikationskennung (410, 460) eine die Hand-Werkzeugmaschine (80) identifizierende Werkzeugmaschinen-Identifikationskennung (410, 460) umfasst.

7. Verfahren nach einem der vorhergehenden Ansprüche, **dadurch gekennzeichnet, dass** der mindestens eine Betriebsparameter (400, 450) einen Sauggerät-Betriebsparameter (400, 450) des Sauggeräts (10), der einen beim Betrieb des Sauggeräts (10) möglichen oder aktuell auftretenden Betriebszustand repräsentiert, und/oder eine das Sauggerät (10) identifizierende Sauggerät-Identifikationskennung (410, 460) umfasst, wobei zweckmäßigerweise der mindestens eine Sauggerät-Betriebsparameter (400, 450) und/oder die Sauggerät-Identifikationskennung (410, 460) eine Saugleistung des Saugmotors (19) und/oder eine maximale Größe des Saugstroms (20) und/oder eine noch vorhandene Aufnahmekapazität für Partikel, angibt.

8. Sauggerät (10) zum Absondern von Partikeln aus einem Saugstrom (20), mit einem Saugmotor (19) zum Erzeugen des Saugstroms (20) und mit einem Saugergehäuse (11), in dem der Saugmotor (19) und ein Staubsammelraum (15) zum Sammeln von aus dem Saugstrom (20) abgesonderten Partikeln angeordnet ist, wobei das Sauggerät (10) zum Absaugen von beim Betrieb einer einen Antriebsmotor (81) zum Antreiben eines Werkzeugs (82) aufweisenden Hand-Werkzeugmaschine (80) anfallender Partikel und zur Durchführung des Verfahrens gemäß einem der Ansprüche 1-7 vorgesehen ist, **dadurch gekennzeichnet, dass** es eine Sauggerät-Kommunikationseinrichtung (40; 140) zur Kommunikation mit einer in einem Abstand zu dem Saugergehäuse (11) im Zusammenhang mit der Hand-Werkzeugmaschine (80) zu betreibenden oder einen Bestandteil der Hand-Werkzeugmaschine (80) bildenden Extern-Kommunikationseinrichtung (50; 150; 250) aufweist, wobei die Sauggerät-Kommunikationseinrichtung (40; 140) zum leitungslosen oder leitungsgebundenen Senden und/oder zum leitungslosen oder leitungsgebundenen Empfangen mindestens einer Identifikationskennung (410, 460) und/oder eines Betriebsparameters (400, 450) an die oder von der Extern-Kommunikationseinrichtung (50; 150; 250) ausgestaltet ist.

9. Sauggerät (10) nach Anspruch 8, **dadurch gekennzeichnet, dass** es zur Einstellung mindestens einer Funktion des Sauggeräts (10), insbesondere zur Einstellung einer Saugleistung des Saugmotors (19) und/oder eines Größe des Saugstroms (20) und/oder einer Abreinigungsfunktion zum Abreinigen eines Filters des Sauggeräts (10), und/oder der Hand-Werkzeugmaschine (80) anhand der mindestens einen Identifikationskennung (410, 460) und/oder des Betriebsparameters (400, 450) ausgestaltet ist.

10. Sauggerät (10) nach Anspruch 8 oder 9, **dadurch gekennzeichnet, dass** die Sauggerät-Kommunikationseinrichtung (40; 140) zum Senden eines anhand des empfangenen Betriebsparameters (400, 450) und/oder der empfangenen Identifikationskennung (410, 460) gebildeten Steuersignals (351, 353) und/oder Meldesignals (352, 354) an die Extern-Kommunikationseinrichtung (50; 150; 250) ausgestaltet ist, wobei zweckmäßigerweise das Steuersignal (351, 353) zur Einstellung mindestens einer Funktion der Hand-Werkzeugmaschine (80), insbesondere zur Steuerung des Antriebsmotors (81) der Hand-Werkzeugmaschine (80), und/oder das Meldesignal (352, 354) vorteilhaft zur Ausgabe einer von der Sauggerät-Kommunikationseinrichtung (40; 140) oder dem Sauggerät (10) ermittelten Information, insbesondere eines Warnhinweises, vorgesehen ist.

11. Sauggerät (10) nach einem der Ansprüche 8 bis 10, **dadurch gekennzeichnet, dass** es ein insbesondere an der Sauggerät-Kommunikationseinrichtung (40; 140) angeordnetes Ausgabemittel (102, 103) zur Ausgabe einer, insbesondere anhand des empfangenen Betriebsparameters (400, 450) und/oder der empfangenen Identifikationskennung (410, 460) ermittelten, Information aufweist.

12. Extern-Kommunikationseinrichtung (50; 150; 250) zur Durchführung des Verfahrens gemäß einem der Ansprüche 1-7 in Zusammenwirkung mit einer Hand-Werkzeugmaschine (80), wobei die Extern-Kommunikationseinrichtung (50; 150; 250) einen Bestandteil der Hand-Werkzeugmaschine (80) bildet oder ein mit der Hand-Werkzeugmaschine (80) verbindbares Modul ist, **dadurch gekennzeichnet, dass** die Extern-Kommunikationseinrichtung (50; 150; 250) zum leitungslosen oder leitungsgebundenen Senden und/oder zum leitungslosen oder leitungsgebundenen Empfangen mindestens einer Identifikationskennung (410, 460) und/oder eines Betriebsparameters (400, 450) an die Sauggerät-Kommunikationseinrichtung (40; 140) oder von der Sauggerät-Kommunikationseinrichtung (40; 140) ausgestaltet ist.

13. Extern-Kommunikationseinrichtung nach Anspruch 12, **dadurch gekennzeichnet, dass** sie zur Einstellung mindestens einer Funktion des Sauggeräts (10) und/oder der Hand-Werkzeugmaschine (80) anhand der mindestens Identifikationskennung (410, 460) und/oder des Betriebsparameters (400, 450) ausgestaltet ist.

14. Extern-Kommunikationseinrichtung nach Anspruch 12 oder 13, **dadurch gekennzeichnet, dass** sie zum Senden eines anhand des empfangenen Betriebsparameters (400, 450) und/oder der empfangenen Identifikationskennung (410, 460) gebildeten Steuersignals (351, 353) zur Einstellung mindestens einer Funktion des Sauggeräts (10), insbesondere zur Einstellung einer Saugleistung des Saugmotors (19) und/oder eines Größe des Saugstroms (20) und/oder einer Abreinigungsfunktion zum Abreinigen eines Filters des Sauggeräts (10), und/oder zum Senden eines Meldesignals (352, 354) an die Sauggerät-Kommunikationseinrichtung (40; 140) zur Ausgabe einer von der Extern-Kommunikationseinrichtung (50; 150; 250) oder der Hand-Werkzeugmaschine (80) ermittelten Information, insbesondere eines Warnhinweises, ausgestaltet ist und/oder dass sie zum Empfang der mindestens einen Identifikationskennung (410, 460) oder des Betriebsparameters (400, 450) oder beiden von einer Steuereinrichtung (88) der Hand-Werkzeugmaschine (80) und/oder zum Senden der mindestens einen Identifikationskennung (410, 460) und/oder des Betriebsparameters (400, 450) an die Steuereinrichtung (88) der Hand-Werkzeugmaschine (80) ausgestaltet ist.

15. Extern-Kommunikationseinrichtung nach einem der Ansprüche 12 bis 14, **dadurch gekennzeichnet, dass** sie als ein zwischen ein Gehäuse einer Hand-Werkzeugmaschine (80) und ein Energiespeichermodul (90) zur elektrischen Stromversorgung der Hand-Werkzeugmaschine (80) anordenbares Zwischenmodul (100) ausgestaltet ist und/oder dass sie einen insbesondere als Modul ausgestalteten Bestandteil einer Hand-Werkzeugmaschine (80) oder eines Energiespeichermoduls (90) zur elektrischen Versorgung einer Hand-Werkzeugmaschine (80) bildet und/oder dass sie eine Schnittstelle (259) zur insbesondere drahtlosen Kommunikation mit der Hand-Werkzeugmaschine (80), insbesondere deren Steuereinrichtung (88), aufweist und/oder dass sie eine Schalteinrichtung (258) zum Schalten einer elektrischen Versorgungsspannung oder Druckluft-Versorgung der Hand-Werkzeugmaschine (80) aufweist.
